(19) Europäisches Patentamt
European Patent Office
Office européen des brevets

(11) **EP 4 035 531 A1**

(12) **DEMANDE DE BREVET EUROPEEN**


(43) Date de publication:
**03.08.2022 Bulletin 2022/31**

(21) Numéro de dépôt: **22154131.1**

(22) Date de dépôt: **30.01.2022**

(51) Classification Internationale des Brevets (IPC):
***A01N 63/38*** *(2020.01)* ***A01P 3/00*** *(2006.01)*

(52) Classification Coopérative des Brevets (CPC):
(C-Sets disponibles)
**A01P 3/00; A01N 63/38** (Cont.)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **30.01.2021 FR 2100917**

(83) **Déclaration conformément à la règle 32(1) CBE (solution de l'expert)**



(71) Demandeur: **Eléphant Vert France**
**77700 Serris (FR)**

(72) Inventeurs:
- **CHEBIL, Asma**
**94120 Fontenay-sous-Bois (FR)**
- **DUFOUR, Samuel**
**31400 Toulouse (FR)**
- **DUSSART, Jean-François**
**30800 Saint Gilles (FR)**
- **MONNIER, Noadya**
**93160 Noisy le grand (FR)**
- **THEVENIEAU, France**
**28000 Chartres (FR)**

(74) Mandataire: **A.P.I. Conseil**
**Immeuble Newton**
**4, rue Jules Ferry**
**64000 Pau (FR)**


(54) **PROCEDE DE LUTTE CONTRE DES MALADIES ASSOCIEES A DES CHAMPIGNONS ASCOMYCETES ET COMPOSITION PHYTOSANITAIRE ASSOCIEE**


(57) L'invention porte sur un procédé (100) de lutte contre une maladie d'une plante provoquée par un ascomycète pathogène, ledit procédé comprenant au moins une étape d'application (110) d'une souche de *Trichoderma atroviridae* EVCH0429 enregistrée sous le numéro CNCM I-5638 et d'au moins une autre souche de *Trichoderma* sur au moins une partie aérienne de la plante à traiter contre ledit ascomycète pathogène.


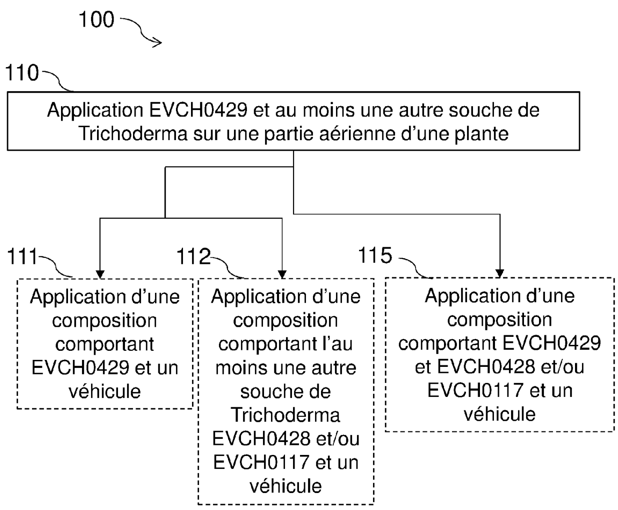


**FIG. 1**

EP 4 035 531 A1

(52) Classification Coopérative des Brevets (CPC):
(Cont.)

C-Sets
**A01N 63/38, A01N 63/38**

SEQUENCE LISTING

<110> ELEPHANT VERT France

<120> PROCEDE DE LUTTE CONTRE DES MALADIES ASSOCIEES A DES CHAMPIGNONS ASCOMYCETES ET COMPOSITION PHYTOSANITAIRE ASSOCIEE

<130> 0846-ELE03-FR-EP

<150> FR2100917
<151> 2021-01-30

<160> 2

<170> BiSSAP 1.3.6

<210> 1
<211> 910
<212> DNA
<213> Trichoderma atroviride

<220>
<223> TEF1- de EVCH0429

<400> 1
```
tcgctgccgg tactggtgag ttcgaggctg gtatctccaa ggatggccag acccgtgagc      60

acgctctgct cgcctacacc ctgggtgtca agcagctcat cgttgccatc aacaagatgg     120

acactgccaa ctgggccgag gctcgttacc ttgagatcat caaggagacc tccaacttca     180

tcaagaaggt cggcttcaac cccaagaccg ttgccttcgt ccccatctcc ggcttcaacg     240

gcgacaacat gttggctgcc tccaccaact gcccctggta caagggctgg gagaaggaga     300

ccaaggctgg caagtccacc ggcaagaccc ttctcgaggc cattgacgcc attgagcccc     360

ccaagcgtcc cacagacaag cccctccgtc ttccccttca ggatgtttac aaaatcggtg     420

gtattggaac agtccctgtc ggccgtatcg agactggtat cctcaagccc ggtatggtcg     480

ttaccttcgc tccctccaac gtcaccactg aagtcaagtc cgttgagatg caccacgagc     540

agctcgtcga gggtgtcccc ggtgacaacg ttggattcaa cgtcaagaac gtctccgtca     600

aggatatccg ccgtggtaac gttgccggtg actccaagaa cgaccccccc atgggtgccg     660

cttctttcaa cgcccaggtc atcgtcatga accaccctgg ccaggtcggt gccggatacg     720

ctcccgtcct cgattgccac actgcccaca ttgcctgcaa gttctctgag ctcctcgaga     780

agatcgaccg ccgtaccggt aaggctactg aggcctcccc caagttcatc aagtctggtg     840

actccgccat cgtcaagatg gttccctcca agcccatgtg cgttgaggcc ttcaccgact     900

accctcccct                                                            910
```

<210> 2
<211> 882
<212> DNA
<213> Trichoderma asperellum

<220>
<223> TEF1- de EVCH0428

<400> 2

```
tactggtgag ttcgaggctg gtatctccaa ggatggccag acccgtgagc acgctctgct      60
cgcctacacc ctgggtgtca agcagctcat cgttgccatc aacaagatgg acactgccaa     120
ctgggctgag gctcgttacc ttgagatcat caaggagacc tccaacttca tcaagaaggt     180
cggcttcaac cccaagaccg ttgccttcgt ccccatctcc ggtttcaacg gtgacaacat     240
gctgtccccc tccaccaact gcccctggta caagggctgg gagaaggaga ccaaggctgg     300
caagtccacc ggtaagaccc tcctcgaggc catcgacgcc attgagcccc ccaagcgtcc     360
cacagacaag cccctccgtc tgcccctcca ggacgtctac aagatcggtg gtatcggaac     420
agtccctgtc ggccgtatcg agactggtgt cctcaagccc ggtatggtcg tcaccttcgc     480
tccctccaac gtcaccactg aagtcaagtc cgtcgagatg caccacgagc agctcgctga     540
gggtgtcccc ggtgacaacg ttggattcaa cgtcaagaac gtctctgtca aggatatccg     600
ccgtggtaac gttgccggtg actccaagaa cgaccctccc atgggtgccg cttctttcaa     660
cgcccaggtc attgtcatga accaccctgg ccaggtcggt gccggttacg ctcccgtcct     720
cgattgccac actgcccaca ttgcctgcaa gttctctgag ctcctcgaga agatcgaccg     780
ccgtaccggt aaggctactg aggcctcccc caagttcatc aagtctggtg actccgccat     840
cgtcaagatg gttccctcca agcccatgtg cgttgaggct tt                        882
```

## Description

L'invention s'intéresse au domaine du contrôle biologique des maladies des plantes causées par des champignons pathogènes, et plus particulièrement au contrôle biologique des champignons pathogènes de la classe des ascomycètes. L'invention concerne une composition phytosanitaire ainsi qu'un procédé de lutte contre une maladie des plantes provoquée par un champignon pathogène de type ascomycète.

## [Art antérieur]

La population mondiale est d'environ 7,6 milliards et atteindra 9,8 milliards d'ici 2050, donc l'agriculture est vraiment un point clé pour nourrir la population non seulement en Europe mais aussi pour les autres continents. Selon l'Organisation des Nations Unies pour l'alimentation et l'agriculture, la demande mondiale en céréales va augmenter jusqu'en 2030. Certains experts prévoient une croissance modeste, alors que d'autres prévoient une augmentation considérable de 50%. Considérant que les cultures en général sont sensibles à des phytopathogènes, quel que soit le scénario, il y aura un besoin de production accru au cours des prochaines décennies et, si les habitudes d'exploitation des terres arables ne sont pas modifiées, cela pourrait accentuer la pollution de notre environnement.

En effet, l'utilisation accrue de fongicides chimiques au cours de ces dernières décennies dans l'agriculture pour lutter contre les phytopathogènes a généré de multiples impacts. Différentes études publiées mettent en évidence des augmentations de risque significatives pour plusieurs pathologies en lien avec l'exposition des travailleurs et de leur famille. Plus largement, l'ensemble des consommateurs est potentiellement concerné par les dangers que peuvent présenter les pesticides. Le coût en Europe des conséquences de santé de l'utilisation des pesticides via leurs mécanismes de perturbation endocrinienne est estimé à 120 milliards d'euros par an.

L'utilisation des produits phytopharmaceutiques constitue aussi un enjeu majeur pour l'environnement. La contamination de la quasi-généralité des cours d'eau entraîne un coût du traitement curatif de l'eau estimé entre 260M€ et 360M€ par an (Rapport public « Utilisation des produits phytopharmaceutiques » de 2017 disponible sur le site de l'Inspection Générale des Affaires Sociales de la République Française sous <https://www.igas.gouv.fr/IMG/pdf/2017-124R-Tome1-Rapport.pdf>).

Ainsi, la réduction de l'utilisation des produits phytopharmaceutiques est un axe clé tant au regard des enjeux sanitaires et environnementaux que de la réponse à une demande sociétale forte.

Des solutions techniques existent pour diminuer rapidement l'usage d'un certain nombre de produits phytopharmaceutiques en agriculture. Elles se basent sur des leviers agronomiques et de biocontrôle. La combinaison de ces deux axes sera vraisemblablement la clé du développement efficace de solutions alternatives aux pesticides tout en maintenant les rendements agricoles.

Le remplacement des fongicides chimiques ou tout au moins la réduction de leur utilisation a pu voir le jour grâce à l'utilisation de fongicides dits « biologiques », ou biofongicides, à l'identification de cultivars plus résistants aux pathogènes et à l'identification d'antagonistes microbiens qui interfèrent avec la survie ou les activités du pathogène.

Parmi les alternatives aux produits phytopharmaceutiques chimiques, les biofongicides à base microbienne présentent des avantages significatifs par rapport aux autres tels que : une grande variété de souches naturellement présentes dans le milieu offrant un choix large de matières actives potentielles; un mode de production respectueux de l'environnement : sans solvant, sans incorporation de composés dérivés des énergies fossiles, permettant une valorisation potentielle d'agro-déchets, et donc, de manière plus générale, avec un impact carbone faible. Outre leur activité fongicide, les micro-organismes peuvent dans certains cas avoir des effets stimulant sur la croissance de la plante en favorisant une meilleure absorption des composants nutritifs par la plante, en améliorant sa croissance et sa résistance aux stress biotiques et/ou abiotiques. Cependant, malgré tous ces atouts, le développement de biofongicides à base de micro-organismes est encore limité par des contraintes techniques et économiques. En effet, beaucoup de souches microbiennes manquent d'efficacité, ne sont pas adaptées à tous les modes d'application, ou encore sont très spécifiques d'un pathogène, voire à un stade de développement donné de ce pathogène.

Cependant, parmi les espèces de *Trichoderma*, une grande variabilité en termes d'activité de lutte biologique, de spécificité, de mécanisme d'action, de production de métabolites et de survie dans le sol ou sur les plantes limite les espèces de ce genre à des utilisations très spécifiques tant du point de vue de la maladie phytosanitaire que des modes d'application (Benitez et al., 2004). Également, les espèces *Trichoderma atroviridae* et *asperellum* sont largement utilisées dans le cadre du traitement racinaire ou de semences dans les cultures maraichères. Néanmoins, il existe encore un grand nombre de pathologies pour lesquelles l'efficacité des *Trichoderma* en tant qu'agent de biocontrôle n'a pas été étudiée. Notamment, les pathologies causées par des champignons pathogènes de la famille des ascomycètes responsables, par exemple, de la fusariose ou de la septoriose du blé, de la sclérotiniose du colza, représentent des maladies qui impactent bien souvent des surfaces de cultures très importantes. Concernant ces maladies, notamment celles touchant le blé, les solutions commerciales de lutte biologique ont jusqu'à aujourd'hui démontré une faible efficacité des *Trichoderma* et plus largement des produits microbiens (comprenant les virus, champignons, protozoaires, bactéries). Cela s'explique notamment par la faible stabilité de ces produits de lutte biologique dans les cultures en champs.

Également, la sclérotiniose est l'une des principales maladies du colza qui cause des pertes de rendement pouvant atteindre 50% pour les plantes touchées. Les sclérotes (corps au repos) produits par le champignon sur le colza sont capables de survivre à long terme dans le sol. L'accumulation de sclérotes dans le sol, favorisée par des rotations courtes des cultures, a donc des conséquences directes et de long terme qui peuvent constituer des menaces importantes pour les agriculteurs.

Les fongicides et en particulier les biofongicides présentent une activité curative quasiment inexistante et sont généralement utilisés en traitement préventif, c'est-à-dire qu'ils permettent de prévenir ou de ralentir la contamination par des pathogènes.

Pour lutter contre la sclérotiniose et la fusariose, un biofongicide pour traiter le blé et le colza, commercialisé sous le nom Polyversum®, est couramment utilisé. Ce biofongicide comprend un mycoparasite de l'espèce *Pythium oligandrum* rattaché à la classe des oomycètes. Ce mycoparasite entre en compétition avec les champignons pathogènes et les parasites. Il dégrade la paroi des champignons cibles pour y pénétrer et entraîner leur mort. Cependant, l'utilisation de ce produit ne permet pas de s'affranchir complètement de l'utilisation de pesticides chimiques. Son utilisation est généralement couplée avec celle d'un triazole, ledit triazole étant alors utilisé en quantité moins importante que si utilisé seul.

A l'heure actuelle, les traitements des cultures en champs (*i.e.* pour la filière dite des grandes cultures qui comprend les cultures des céréales, oléagineux ou protéagineux, mais aussi des pommes de terre et betteraves) impliquent l'utilisation de compositions chimiques ; l'utilisation de biofongicides à base de *Trichoderma* se limite en effet à des cultures impliquant des superficies bien moindres, telles que les cultures maraîchères, ornementales ou les vignobles. Par exemple, des compositions comprenant des espèces de *Trichoderma* telles que *T. gamsii et T. asperellum* sont utilisées pour prévenir l'apparition de champignons pathogènes dans le cadre du traitement des cultures de fraises, des vignes et des cultures légumières, ou encore telles que *T. atroviridae* dans le cadre du traitement des vignes. Les utilisations connues de *Trichoderma* sont donc limitées et adaptées à une application racinaire par irrigation en sol (*via* la micro-irrigation par exemple), et leur utilisation pour le traitement de cultures en champs n'est donc pas possible.

Certaines espèces de *Trichoderma* ont été décrites dans le cadre de la protection des cultures en champs, telles que notamment *T. harzanium*, pour la protection des cultures de blé, de maïs, de colza, de canne à sucre et de soja, *T. asperellum*, *T. harzanium et T. viride* pour la protection des cultures de blé contre la fusariose ou bien *T. harzanium* (Stocco et al. ,2016) et *T. koningii* contre la sclerotinia (Perello et al., 2006). Néanmoins, dans le cadre du traitement des pathologies causées par la septoriose du blé, les modes d'application des compositions de *Trichoderma* consistent à enrober les graines ou bien à effectuer un traitement racinaire en sol lors des différents stades de développement des cultures de blé tels que le traitement des semis.

A l'heure actuelle les décisions d'application de pesticides sur les cultures sont basées sur une simple évaluation du risque. Cette évaluation est basée sur une estimation de l'infestation des cultures et/ou sur les prévisions des conditions météorologiques les plus favorables pour l'infection des cultures. Ainsi, une prédiction précise de l'infection est impossible. Cette incertitude préempte grandement l'efficacité de prévention de la contamination des cultures par ces traitements. En outre, limitées au traitement racinaire ou des semences, les solutions proposées aujourd'hui ne permettent pas de lutter efficacement contre les champignons pathogènes de genre ascomycète à un stade de développement avancé (post germination) des cultures.

Les agriculteurs attendent donc des produits de lutte biologique capables de prévenir le développement des ascomycètes pathogènes et ce tout au long du cycle de développement des cultures, c'est-à-dire de la germination des cultures jusqu'à leur récolte et à leur stockage.

Ainsi, il existe un besoin pour de nouvelles solutions, à base d'agents de lutte biologique, permettant de contrer efficacement le développement de champignons pathogènes de la famille des ascomycètes afin de protéger les cultures en champs.

## [Problème technique]

L'invention a donc pour but de remédier aux inconvénients de l'art antérieur. En particulier, l'invention propose un procédé de lutte contre une maladie d'une plante provoquée par un ascomycète pathogène permettant de s'affranchir ou de minimiser l'utilisation de fongicide chimique tout en permettant le traitement de culture en champs par la voie aérienne. L'invention a en outre pour but de proposer une composition phytosanitaire utilisable dans le cadre du procédé de lutte contre une maladie d'une plante provoquée par un ascomycète pathogène.

## [Brève description de l'invention]

A cet effet, l'invention porte sur un procédé de lutte contre une maladie d'une plante provoquée par un ascomycète pathogène, ledit procédé comprenant au moins une étape d'application d'une souche de *Trichoderma atroviridae* EVCH0429 enregistrée sous le numéro CNCM I-5638 et d'au moins une autre souche de Trichoderma sur au moins une partie aérienne de la plante à traiter contre ledit ascomycète pathogène.

Il a en effet été découvert que l'application combinée, sur la partie aérienne des plantes, d'une souche de *Trichoderma atroviridae* EVCH0429 enregistrée sous le numéro CNCM I-5638 et d'au moins une autre souche de *Trichoderma* permet un traitement efficace des cultures contre les pathogènes fongiques, alors que les traitements biofongicides usuels sont appliqués au sol en traitement racinaire. Ce nouveau mode d'application permet un traitement biofongicide des cultures impropres, par leurs dimensions, au traitement racinaire. Également, ce traitement présente l'avantage d'être applicable tout au long du développement de la plante, et également après récolte. En outre, le traitement aérien combiné à base de *Trichoderma atroviridae* EVCH0429 est plus efficace que les traitements aériens à base d'autres *Trichoderma.* Avantageusement, dans le procédé de l'invention l'au moins une autre souche de *Trichoderma* est sélectionnée parmi *Trichoderma asperellum* EVCH0428 *ou Trichoderma harzianum* EVCH0117, enregistrées respectivement sous les numéros CNCM I-5637 et CNCM I-5636.

**Selon d'autres caractéristiques optionnelles du procédé, ce dernier peut inclure une ou plusieurs des caractéristiques suivantes, seules ou en combinaison :**

- l'étape d'application comporte au moins une application d'une composition comportant un *Trichoderma atroviridae* EVCH0429 ainsi qu'au moins une application d'une composition comportant une autre souche de *Trichoderma* les au moins une étape d'application étant réalisées concomitamment ou séquentiellement. Utiliser des compositions différentes permet l'optimisation des formulations à chacune des souches utilisées, et d'éviter des incompatibilités des composants ou des propriétés des différentes compostions,
- l'étape d'application consiste en une application par pulvérisation.
- la partie aérienne de la plante à traiter correspond à une feuille, une tige, une fleur, un épi et/ou un fruit. Ainsi toutes les parties aériennes quel que soit le stade de développement de la plante peuvent être traitées et/ou protégées.
- l'au moins une étape d'application comporte une application réalisée sur ladite au moins une partie aérienne de la plante après récolte. Ce traitement n'est pas soumis aux aléas climatiques, on peut donc en attendre un effet plus pérenne qu'en champ ou culture. De même, cela permet d'améliorer la conservation des récoltes et de prévenir le développement de champignons et la contamination éventuelle par des mycotoxines lors de leur stockage.
- l'ascomycète pathogène correspond à un ascomycète appartenant à l'une des familles suivantes :

  - *Microdochium spp* et *Fusarium « roseum »,*
  - *Phaeosphaeriaceae* et *Mycosphaerellaceae,* et
  - *Sclerotiniaceae.*

Les champignons de ces familles sont responsables par exemple de maladies telles que la fusariose du blé, la septoriose du blé ou la cercosporiose du bananier, le développement de la pourriture grise et blanche d'un grand nombre de plantes qui sont d'un grand détriment dans l'agriculture et les cultures ornementales.

- la maladie est choisie parmi la sclerotinia du colza, la fusariose du blé, la septoriose du blé, la cercosporiose du bananier, la pourriture grise et la pourriture blanche.

Avantageusement ce procédé peut être mis en œuvre sur tout type de culture telle que des cultures en champs, ou en serre, des cultures ornementales, ou en maraichage pour traiter des Brassicacées, des Graminées, des Vitacées et des Musacées.

L'invention concerne également une composition phytosanitaire qui comprend, en tant que principe actif, des spores de *Trichoderma atroviridae* EVCH0429, souche enregistrée sous le numéro CNCM I-5638 et des spores d'au moins une autre souche de *Trichoderma*, et un véhicule adapté, de préférence spécifique, à une application de ladite composition sur une partie aérienne d'une plante.

**Selon d'autres caractéristiques optionnelles de la composition, cette dernière peut inclure une ou plusieurs des caractéristiques suivantes, seules ou en combinaison :**

- l'au moins une autre souche de Trichoderma est sélectionnée parmi *Trichoderma asperellum* EVCH0428 et *Trichoderma harzianum* EVCH0117 enregistrées respectivement sous les numéros CNCM I-5637 et CNCM I-5636. Ces compositions sont en effet particulièrement efficaces.

- Elle se trouve sous forme liquide et comprend une concentration en spores de *Trichoderma* comprise entre $10^8$ ufc/L et $10^{14}$ ufc/L, de préférence entre $5.10^8$ ufc/L et $5.10^{12}$ ufc/L. La forme liquide est en effet particulièrement adaptée à l'épandage en culture.
- Elle comprend un véhicule qui comprend un agent mouillant. Ces agents permettent une couverture optimale de la surface de la plante par la composition, et par là garantissent l'efficacité du traitement de la culture.
- Elle comprend un véhicule comprenant une concentration en agent mouillant comprise entre 0.1 g/L et 20 g/L. Ces concentrations sont pleinement adaptées à permettre l'étalement et la couverture des parties aériennes de la plante.

D'autres avantages et caractéristiques de l'invention apparaitront à la lecture de la description suivante donnée à titre d'exemple illustratif et non limitatif, en référence aux Figures annexées :

La figure 1 représente les étapes d'un procédé de lutte contre une maladie d'une plante provoquée par un ascomycète pathogène selon l'invention. Les étapes en pointillés sont facultatives.

La figure 2 représente un arbre phylogénétique basé sur le marqueur TEF1-$\alpha$. Les flèches indiquent l'emplacement des souches EVCH0429 et EVCH0428, pour lesquelles la comparaison des séquences ITS-1 et TEF1-a permettent l'attribution respective aux espèces *Trichoderma atroviridae* et *Trichoderma asperellum* (exemple 1).

**[Description de l'inventionl**

Dans les revendications, le terme "**comprendre**" ou "**comporter**" n'exclut pas, par définition, la présence d'autres éléments ou d'autres étapes que ceux mentionnés.

Dans la suite de la description, les mêmes références sont utilisées pour désigner les mêmes éléments. Les signes de référence ne sauraient être compris comme limitant la portée de l'invention. En outre, les différentes caractéristiques présentées et/ou revendiquées peuvent être avantageusement combinées. Leur présence dans la description ou dans des revendications dépendantes différentes, n'excluent pas cette possibilité.

Les termes « traiter » ou « traitement » désignent, concernant le procédé et la composition selon l'invention, la prévention et également le traitement curatif des maladies associées à des champignons ascomycètes. Plus particulièrement, traiter au sens de l'invention comprend prévenir ou retarder le développement des dites maladies ou encore diminuer l'étendue de l'infestation des plantes et des cultures. De manière préférée, traiter s'entend de prévenir l'infestation ou de retarder ou empêcher l'expansion des champignons ascomycètes sur les plantes et cultures.

Le terme « pulvérisation », concerne l'action de projeter une composition sous forme de gouttes, de gouttelettes voire d'aérosol.

L'expression « composition semi-liquide » correspond à une composition à demi liquide, c'est-à-dire dans un état physique entre l'état liquide et l'état solide. A titre d'exemples non limitatifs, une composition semi-liquide peut se présenter sous la forme d'une crème ou d'un gel, et présenter une viscosité allant de 200 Pa s à 2000 Pa s.

« Culture en champs », se comprend d'une culture, de tout type, dont la surface est telle qu'elle ne permet pas une irrigation par des techniques en sol, telle que la micro-irrigation. Plus particulièrement, cela comprend des cultures d'une superficie supérieure à 10 Ha. Encore plus particulièrement cela comprend des cultures de céréales, oléagineux ou protéagineux, mais aussi des pommes de terre et betteraves inadaptées à des techniques d'irrigation en sol.

Les termes « *Trichoderma atroviridae* EVCH0429 », « *T. atroviridae* EVCH0429 », « EVCH0429 », « souche de *Trichoderma atroviridae* EVCH0429 », « souche EVCH0429 » sont ici utilisés indifféremment, et désignent la souche de *Trichoderma atroviridae* EVCH0429, et notamment quand il s'agit des compositions selon l'invention, de spores de cette souche.

Les termes « *Trichoderma asperellum* EVCH0428 », « *T. asperellum* EVCH0428 », « EVCH0428 », « souche de *Trichoderma asperellum* EVCH0428 », « souche EVCH0428 » sont ici utilisés indifféremment, et désignent la souche de *Trichoderma asperellum* EVCH0428, et notamment quand il s'agit des compositions selon l'invention, de spores de cette souche.

Les termes « *Trichoderma harzianum* EVCH0117 », « *T. harzianum* EVCH0117 », « EVCH0117 », « souche de *Trichoderma harzianum* EVCH0117 », « souche EVCH0117 » sont ici utilisés indifféremment, et désignent la souche de *Trichoderma harzianum* EVCH0117, et notamment quand il s'agit des compositions selon l'invention, de spores de cette souche.

Plus particulièrement, les souches EVCH0429, EVCH0428 selon la présente invention se caractérisent par les séquences TEF1-a (pour, selon la terminologie anglo-saxonne, *translation elongation factor* 1 *alpha)* présentées dans le tableau suivant :

[Tableau 1]

| | |
|---|---|
| SEQ ID NO 1 : TEF1- α de EVCH0429 | TCGCTGCCGGTACTGGTGAGTTCGAGGCTGGTATCTCCAAGGATGG<br>CCAGACCCGTGAGCACGCTCTGCTCGCCTACACCCTGGGTGTCAAG<br>CAGCTCATCGTTGCCATCAACAAGATGGACACTGCCAACTGGGCCGA<br>GGCTCGTTACCTTGAGATCATCAAGGAGACCTCCAACTTCATCAAGA<br>AGGTCGGCTTCAACCCCAAGACCGTTGCCTTCGTCCCCATCTCCGGC<br>TTCAACGGCGACAACATGTTGGCTGCCTCCACCAACTGCCCCTGGTA<br>CAAGGGCTGGGAGAAGGAGACCAAGGCTGGCAAGTCCACCGGCAA<br>GACCCTTCTCGAGGCCATTGACGCCATTGAGCCCCCCAAGCGTCCC<br>ACAGACAAGCCCCTCCGTCTTCCCCTTCAGGATGTTTACAAAATCGG<br>TGGTATTGGAACAGTCCCTGTCGGCCGTATCGAGACTGGTATCCTCA<br>AGCCCGGTATGGTCGTTACCTTCGCTCCCTCCAACGTCACCACTGAA<br>GTCAAGTCCGTTGAGATGCACCACGAGCAGCTCGTCGAGGGTGTCC<br>CCGGTGACAACGTTGGATTCAACGTCAAGAACGTCTCCGTCAAGGAT<br>ATCCGCCGTGGTAACGTTGCCGGTGACTCCAAGAACGACCCCCCCA<br>TGGGTGCCGCTTCTTTCAACGCCCAGGTCATCGTCATGAACCACCCT<br>GGCCAGGTCGGTGCCGGATACGCTCCCGTCCTCGATTGCCACACTG<br>CCCACATTGCCTGCAAGTTCTCTGAGCTCCTCGAGAAGATCGACCGC<br>CGTACCGGTAAGGCTACTGAGGCCTCCCCCAAGTTCATCAAGTCTGG<br>TGACTCCGCCATCGTCAAGATGGTTCCCTCCAAGCCCATGTGCGTTG<br>AGGCCTTCACCGACTACCCTCCCCT |
| SEQ ID NO 2 : TEF1-α de EVCH0428 | TACTGGTGAGTTCGAGGCTGGTATCTCCAAGGATGGCCAGACCCGT<br>GAGCACGCTCTGCTCGCCTACACCCTGGGTGTCAAGCAGCTCATCG<br>TTGCCATCAACAAGATGGACACTGCCAACTGGGCTGAGGCTCGTTAC<br>CTTGAGATCATCAAGGAGACCTCCAACTTCATCAAGAAGGTCGGCTT<br>CAACCCCAAGACCGTTGCCTTCGTCCCCATCTCCGGTTTCAACGGTG<br>ACAACATGCTGTCCCCCTCCACCAACTGCCCCTGGTACAAGGGCTG<br>GGAGAAGGAGACCAAGGCTGGCAAGTCCACCGGTAAGACCCTCCTC<br>GAGGCCATCGACGCCATTGAGCCCCCCAAGCGTCCCACAGACAAGC<br>CCCTCCGTCTGCCCCTCCAGGACGTCTACAAGATCGGTGGTATCGG<br>AACAGTCCCTGTCGGCCGTATCGAGACTGGTGTCCTCAAGCCCGGT<br>ATGGTCGTCACCTTCGCTCCCTCCAACGTCACCACTGAAGTCAAGTC<br>CGTCGAGATGCACCACGAGCAGCTCGCTGAGGGTGTCCCCGGTGAC<br>AACGTTGGATTCAACGTCAAGAACGTCTCTGTCAAGGATATCCGCCG<br>TGGTAACGTTGCCGGTGACTCCAAGAACGACCCTCCCATGGGTGCC<br>GCTTCTTTCAACGCCCAGGTCATTGTCATGAACCACCCTGGCCAGGT<br>CGGTGCCGGTTACGCTCCCGTCCTCGATTGCCACACTGCCCACATTG<br>CCTGCAAGTTCTCTGAGCTCCTCGAGAAGATCGACCGCCGTACCGGT<br>AAGGCTACTGAGGCCTCCCCCAAGTTCATCAAGTCTGGTGACTCCGC<br>CATCGTCAAGATGGTTCCCTCCAAGCCCATGTGCGTTGAGGCTTT |

*Trichoderma atroviridae* EVCH0429, *Trichoderma asperellum* EVCH0428 et *Trichoderma harzianum* EVCH0117 ont été déposées et enregistrées le 07/01/2021 à l'institut Pasteur (CNCM, 25 rue du Docteur Roux, 75724 PARIS Cedex 15, France) où elles sont disponibles sous les numéros respectifs CNCM I-5638, CNCM I-5637, CNCM I-5636. Comme cela a été évoqué, le constat actuel est que l'utilisation de pesticides chimiques dans le cadre de la lutte contre les pathologies phytosanitaires liées aux champignons de la division Ascomycota (ascomycètes) est prédominante. Bien que l'utilisation de tels pesticides chimiques comme agents de lutte antifongique soit particulièrement efficace, tant sur le plan préventif que sur le plan curatif, l'utilisation de ces pesticides chimiques n'en demeure pas moins dangereuse pour l'utilisateur qui les manipule mais également pour les insectes pollinisateurs ou bien ceux présents dans le sol. En effet, bien souvent, l'utilisation des pesticides entraine la destruction de la faune auxiliaire, utile aux cultures, et pollue les sols, pouvant ainsi rendre ces derniers stériles.

Face à ce constat, les inventeurs ont identifié un procédé de lutte contre les maladies des plantes provoquées par les ascomycètes pathogènes basé sur l'utilisation d'une composition phytosanitaire biofongicide. Ce procédé permet de lutter efficacement contre les maladies issues de champignons de la division ascomycota, tout au long du cycle de développement des cultures, mais aussi lors de la récolte et/ou du stockage des plantes ou de la partie des plantes qui est exploitée.

En outre, l'utilisation de la composition phytosanitaire biofongicide permet de s'affranchir, ou de diminuer, l'utilisation ultérieure ou simultanée de pesticides de synthèse usuellement utilisés pour la même cible, en prévenant la contamination des cultures par un champignon pathogène de la division des ascomycètes tout au long de leur cycle de développement et même après leur récolte.

Ainsi, selon un **premier aspect**, l'invention porte sur un procédé 100 de lutte contre une maladie d'une plante provoquée par un ascomycète pathogène.

Les maladies de la plante peuvent correspondre à toute maladie susceptible de toucher tout ou partie de la plante, telles qu'à titre d'exemples non limitatifs les feuilles, la tige et/ou les fruits. Tel que décrit en lien avec la figure 1, le procédé comprend une étape d'application 110 d'une souche de *Trichoderma atroviridae* EVCH0429 et d'au moins une autre souche de *Trichoderma* sur au moins une partie aérienne de la plante.

Pour cela, l'étape d'application 110 peut avantageusement être mise en œuvre par tout dispositif adapté permettant l'application d'une composition comportant la souche *Trichoderma atroviridae* EVCH0429 et l'au moins une autre souche de *Trichoderma* sur des cultures. De manière préférée, lesdites souches sont présentes dans la composition sous forme de spores. La composition peut être sous forme de poudre ou sous forme liquide ou semi-liquide. De manière également préférée, la composition est sous forme liquide ou semi-liquide, c'est-à-dire que les souches de *Trichoderma*, de préférence leurs spores, sont présentes en suspension dans un milieu liquide ou semi-liquide.

L'étape d'application 110 peut ainsi être effectuée par tout dispositif permettant l'épandage (*e.g.* par pulvérisation) sur des zones cultivées.

En fonction de la zone à traiter, un tel dispositif pourra prendre la forme d'un pulvérisateur portable comportant un compartiment de stockage de la composition à pulvériser, éventuellement un agitateur positionné dans le compartiment de stockage afin de maintenir la substance en mouvement et éviter la formation de dépôt ou la sédimentation des souches ou de leurs spores, une pompe, un distributeur et une buse.

Dans le cadre de cultures de plus grande envergure, l'utilisation d'un pulvérisateur porté, semi porté ou automoteur remorqué ou traîné par un engin motorisé tel qu'un tracteur par exemple pourra être préférée.

En outre, l'étape d'application 110 peut être effectuée par épandage aérien, tel que par avion ou hélicoptère ou encore *via* l'utilisation de drones, autonomes ou non.

Pour des cultures en serre ou sous tunnel, l'épandage par pulvérisation pourra être effectué, par exemple, au moyen d'un pulvérisateur portable, comme mentionné ci-dessus, ou encore au moyen d'un matériel de pulvérisation à jet projeté.

De manière avantageuse, afin de faciliter l'épandage des spores de *Trichoderma* selon le procédé de l'invention et leur tenue sur des cultures, l'étape d'application 110 peut comporter une application 115 d'une composition comportant au moins une souche de *Trichoderma atroviridae* EVCH0429, et au moins une autre souche de *Trichoderma* et un véhicule spécialement adapté. De cette manière, la composition peut être plus aisément chargée dans un dispositif permettant l'épandage, son application s'en trouve facilitée ainsi que l'efficacité du traitement. Le véhicule peut correspondre à une composition comprenant de l'eau et/ou tout type de solvants ou adjuvants adaptés pour les suspensions fongiques, de préférence de spores fongiques, et plus particulièrement d'une ou plusieurs souches de *Trichoderma*, plus particulièrement des espèces *Trichoderma atroviridae, notamment EVCH0429 et Trichoderma harzianum, notamment EVCH0117,* et *Trichoderma asperellum, notamment EVCH0428.*

Dans un mode de réalisation particulier d'un procédé de lutte contre une maladie d'une plante provoquée par un ascomycète pathogène selon l'invention, l'étape d'application 110 peut comporter une application 111 d'une composition comportant un *Trichoderma atroviridae* EVCH0429 et un véhicule. L'étape d'application 110 peut également comporter une application 112 d'une composition comportant au moins une autre souche de *Trichoderma* telle que *EVCH0428 et/ou EVCH0117* et un véhicule. Alternativement, l'étape d'application 112 peut comprendre une application (non représentée sur les figures) d'une composition comportant la souche de *Trichoderma EVCH0428* et un véhicule, et une application (non représentée sur les figures) d'une composition comportant la souche de *Trichoderma EVCH0117.*

Dans ce mode de réalisation les véhicules utilisés en lien avec *Trichoderma atroviridae* EVCH0429 et la au moins une autre souche de *Trichoderma* peuvent être identiques ou bien différents en fonction des propriétés souhaitées pour chacun desdits véhicules.

Il est ainsi possible d'utiliser différentes formulations pour chaque *Trichoderma* utilisés dans le procédé de l'invention, afin de maximiser l'efficacité de chacun de ces derniers une fois appliqués sur la plante.

Ainsi, les applications 111 et 112 peuvent être concomitantes ou séquentielles (*i.e.* séparée dans le temps), mais de manière à ce que *Trichoderma atroviridae EVCH0429* et le au moins un autre *Trichoderma* exercent leurs effets de manière conjointe dans le procédé de traitement selon l'invention.

En outre, en fonction du type de cultures à traiter et/ou des conditions météorologiques, il peut être avantageux que le ou les véhicules présentent des propriétés physico-chimiques particulières, telles que de manière non limitative, un pH donné ou encore une viscosité spécifique, afin d'assurer la tenue de la composition sur les cultures traitées et, par voie de conséquence, contribuant ainsi à une meilleure prévention d'une infection par un champignon pathogène de type ascomycète. Également, le véhicule peut contribuer à adapter la ou les compositions comprenant les *Trichoderma* au mode d'application choisi. Ainsi, par exemple, un antidérive peut être ajouté au véhicule, pour éviter une dispersion de la composition et un meilleur ciblage des cultures, ce qui est particulièrement avantageux dans le cas de cultures non abritées.

De manière avantageuse, l'étape d'application 110 peut être réalisée de manière à obtenir une concentration en spores de *Trichoderma* comprise entre $10^6$ ufc/ha et $10^{16}$ ufc/ha de préférence entre $10^8$ ufc/ha et $10^{15}$ ufc/ha de préférence entre $10^9$ ufc/ha et $10^{14}$ ufc/ha voire entre $10^{10}$ ufc/ha et $10^{13}$ ufc/ha de la culture traitée ; dans un mode de réalisation particulier, la concentration en spores de *Trichoderma atroviridae EVCH0429 est* comprise entre $10^6$ ufc/ha et $10^{16}$ ufc/ha de préférence entre $10^8$ ufc/ha et $10^{15}$ ufc/ha de préférence entre $10^9$ ufc/ha et $10^{14}$ ufc/ha voire entre $10^{10}$ ufc/ha et $10^{13}$ ufc/ha de la culture traitée et la concentration en spores de l'au moins une autre souche de *Trichoderma* peut être comprise entre $10^6$ ufc/ha et $10^{16}$ ufc/ha de préférence entre $10^8$ ufc/ha et $10^{15}$ ufc/ha de préférence entre $10^9$ ufc/ha et $10^{14}$ ufc/ha voire entre $10^{10}$ ufc/ha et $10^{13}$ ufc/ha de la culture traitée.

Le ratio de la quantité de spores de *Trichoderma atroviridae* EVCH0429 à la quantité de spores de l'au moins une autre souche de *Trichoderma* appliqué lors de l'étape 110 peut être de 1/10, 1/9, 1/8, 1/7, 1/6, 1/5, 1/ 4, 1/3, 1/2 ,1/1. Dans un mode de réalisation préféré, ce ratio est de 1/1.

Dans un autre mode de réalisation, le ratio de la quantité de spores de *Trichoderma atroviridae* EVCH0429 à la quantité de spores de l'au moins une autre souche de *Trichoderma* appliqué lors de le l'étape 110 peut être de 10/1, 9/1, 8/1, 7/1, 6/1, 5/ 1, 4/1, 3/1, 2/1.

Dans un mode de réalisation préféré du procédé de l'invention, la au moins une autre souche de *Trichoderma* utilisée en sus de EVCH0429 dans le procédé selon l'invention est choisie parmi les espèces *Trichoderma harzianum*, *Trichoderma asperellum* ou une souche de *Trichoderma atroviride* différente de EVCH0429. De manière particulièrement préférée, la au moins une autre souche de *Trichoderma* utilisée en sus de EVCH0429 est sélectionnée parmi *Trichoderma asperellum* EVCH0428 et *Trichoderma harzianum EVCH0117.*

Dans un mode de réalisation particulier, le procédé de l'invention comprend l'application de EVCH0429, EVCH0428 et EVCH0117.

Afin de prévenir l'infection par des champignons pathogènes de type ascomycète au cours du développement de la plante, plus particulièrement du stade de la germination jusqu'au stade de la récolte et de son stockage, par exemple dans un silo, la partie **aérienne** sujette à l'application 110 de *Trichoderma atroviridae* EVCH0429 et d'au moins une autre souche de *Trichoderma* peut correspondre à une feuille, une tige, une fleur, un épi et/ou un fruit.

De manière avantageuse, les propriétés de traitement des maladies causées par les champignons ascomycètes du procédé de l'invention mise en œuvre sur les cultures peuvent perdurer également après la récolte. Néanmoins, ladite application 110, peut être effectuée sur au moins une partie aérienne de la plante, après la culture de celle-ci, avant ou pendant son stockage ; le traitement peut alors présenter l'intérêt, par exemple, de ne pas être soumis aux aléas climatiques, de permettre une meilleure conservation des récoltes et, par-là, de prévenir le développement de champignons et la contamination éventuelle par des mycotoxines.

Pour prévenir efficacement la contamination par des champignons pathogènes de type ascomycète, l'application 110 peut être unique, double ou répétée 3, 4, 5, 6, 7, 8, 9 voire jusqu'à dix fois, et ce avec une fréquence adaptée à la culture, aux conditions climatiques et/ou au pathogène. Une telle étape d'application 110 peut, à titre d'exemples non limitatifs, être répétée tous les 2, 3, 4, 5, 6, 7, 15 jours, tous les 21 jours ou bien une fois par mois en fonction du type de culture.

En effet, en fonction du type de culture à traiter et des conditions météorologiques qui peuvent influer sur la tenue des *Trichoderma* appliqués selon le procédé de l'invention sur la plante (et donc diminuer la protection conférée par ces-derniers) mais aussi favoriser le développement d'ascomycètes pathogènes, l'homme du métier saura quand et à quel rythme mettre en œuvre le procédé selon l'invention.

De manière avantageuse, un procédé 100 de lutte contre une maladie d'une plante selon l'invention permet de prévenir l'infection par un ascomycète pathogène de la famille des :

- *Microdochium spp* et *Fusarium* « *roseum* » notamment impliqué à différents stades de développement du blé et associés à la fusariose du blé,
- *Phaeosphaeriaceae* et *Mycosphaerellaceae* pour la septoriose du blé ou la cercosporiose du bananier,
- *Sclerotiniaceae* impliquée dans le développement de la pourriture grise et blanche d'un grand nombre de plantes.

En effet, comme il sera détaillé ci-dessous en lien avec une composition phytosanitaire, la combinaison de *Trichoderma atroviridae* EVCH0429 et d'au moins une autre souche de *Trichoderma* telles que, par exemple, EVCH0428 et/ou EVCH0117, permet de prévenir l'infection et/ou de retarder le développement des champignons pathogènes évoqués précédemment.

Ainsi, un procédé 100 de lutte contre une maladie d'une plante selon l'invention sera particulièrement efficace dans le cadre de la prévention de l'infection par une maladie choisie parmi la sclerotinia du colza, la fusariose du blé et la septoriose du blé, la cercosporiose du bananier, la pourriture grise ou la pourriture blanche.

Comme évoqué un tel procédé 100 de lutte contre une maladie d'une plante est adapté pour des cultures en champs, autrement dénommées en agronomie les grandes cultures et qui comprennent les cultures des céréales, oléagineux ou protéagineux, mais aussi des pommes de terre et betteraves. Néanmoins, il est également adapté pour des cultures ornementales, fruitières telles que des cultures tropicales (e.g. bananier, cacaotier) ou en maraîchage également sensibles aux infestations aux ascomycètes pathogènes.

On aura compris que le procédé selon l'invention peut s'appliquer à des cultures très diverses tant quant au type de culture, que de leur superficie, qu'elles soient en champs ou sous abris. Néanmoins, le procédé 100 de l'invention, qui permet la protection des plants contre les ascomycètes par application sur les parties aériennes des plantes est particulièrement adapté à des cultures d'une superficie importante telle que, par exemple, supérieure à 10 ha, supérieure à 20 ha, supérieure à 50 ha, voire supérieure à 100 ha.

Ainsi, un des avantages d'un procédé selon l'invention est que celui-ci peut être appliqué sur des cultures en champs, par voie aérienne, tandis que les souches de *Trichoderma* des solutions de l'art antérieur sont utilisées en lien avec des cultures maraîchères *via* une application par irrigation en sol. Néanmoins, le procédé de l'invention est également adapté au traitement par la voie aérienne des cultures sous serres ou sous tunnels agricoles.

De manière avantageuse, la plante à traiter est choisie dans le groupe des brassicacées, des graminées, des vitacées ou des musacées.

Malgré l'efficacité observée du procédé de l'invention, il peut être souhaitable de combiner le traitement biofongicide de l'invention avec au moins un autre fongicide connu pour le type de culture et/ou la pathologie concernée. Notamment dans le cas des fongicides conventionnels (*i.e.* de synthèse), cela permet d'envisager la diminution des quantités utilisées, soit du fait d'une diminution de la quantité de fongicide conventionnel appliquée sur les plantes, soit du fait d'une diminution de la fréquence du traitement, comparée à son utilisation seul.

Dans tous les cas, cela peut aboutir à une diminution de l'ordre d'un facteur 2, 3, 4 voire 5 des quantités de fongicides conventionnels utilisés, tout en ayant une efficacité satisfaisante du traitement, ce qui est d'un avantage particulier tant du point de vue de la santé du manipulateur que de l'environnement.

Ainsi dans un mode de réalisation particulier, le procédé 100 de lutte contre une maladie d'une plante provoquée par un ascomycète pathogène comprend une étape 120 de traitement de la plante par un autre traitement fongicide. Ce traitement peut être un biofongicide ou un fongicide conventionnel.

L'utilisation combinée de spores de EVCH0429 et d'au moins une autre souche de *Trichoderma* choisie parmi les espèces *Trichoderma harzianum*, *Trichoderma asperellum, Trichoderma atroviride,* telles que, par exemple, EVCH0428, EVCH0117 et/ou EVCH45 permet de réduire significativement la concentration en fongicides conventionnels. De tels produits sont, par exemple :

- Des produits ou compositions comprenant, en tant que principes actifs contre le développement de sclerotinia ou de la fusariose, du tébuconazole et du prothioconazole (par exemple tel que dans la composition commercialisée nom Prosaro®) appliqués chacun à une dose inférieure ou égale à 83,3 g/ha, de préférence appliqués chacun à une dose inférieure ou égale à 62,5 g/ha de manière encore plus préférée, appliqués chacun à une dose inférieure ou égale à 42 g/ha,
- Des produits ou compositions comprenant, en tant que principe actif contre le développement de sclerotinia, du boscalide appliqué à une dose inférieure ou égale à 0,75 Kg/ha, de préférence allant de 0,1 et 0,75 Kg/ha, de manière encore plus préférée allant de 0,25 et 0,5 Kg/ha,
- Des produits ou compositions comprenant, en tant que principes actifs du prothioconazole et de la fluoxastrobine (tel que par exemple le produit commercialisé sous le nom de FANDANGO S®), du prothioconazole appliqué à une dose inférieure ou égale à 150 g/ha de préférence à une dose inférieure ou égale à 100 g/ha ou, de manière encore plus préférée, à une dose inférieure ou égale à 50 g/ha et de la fluoxastrobine appliquée à une dose inférieure à une dose inférieure ou égale à 50 g/ha de préférence à une dose inférieure ou égale à 25 g/ha ou, de manière encore plus préférée, à une dose inférieure ou égale à 12,5 g/ha contre le développement de la fusariose ou de la septoriose,
- Des produits ou compositions comprenant, en tant que principes actifs du prothioconazole et du bixafen (tel que par exemple le produit commercialisé sous le nom de AVIATOR XPRO®), du prothioconazole appliqué à une dose inférieure ou égale à 140 g/ha de préférence à une dose inférieure ou égale à 94 g/ha ou, de manière encore plus préférée, à une dose inférieure ou égale à 47 g/ha et du bixafen appliqué à une dose inférieure à une dose inférieure ou égale à 70 g/ha de préférence à une dose inférieure ou égale à 47 g/ha ou, de manière encore plus préférée, à une dose inférieure ou égale à 30 g/ha contre le développement de la fusariose ou de la septoriose,
- Des produits ou compositions comprenant, en tant que principe actif contre le développement de la fusariose ou de la septoriose, du metconazole (tel que par exemple le produit commercialisé sous le nom de Caramba®) appliqué à une dose inférieure ou égale à 100 g/ha de préférence allant de 22,5 g/ha et 100 g/ha de manière encore plus préférée entre préférence allant de 45 g/ha et 68 g/ha,

- Des produits ou compositions comprenant, en tant que principe actif contre le développement de la sclerotinia, de la fusariose ou de la septoriose, du prothioconazole (tel que par exemple commercialisé sous le nom de JOAO®) appliqué à une dose inférieure ou égale à 150 g/ha de préférence à une dose inférieure ou égale à 100 g/ha ou, de manière encore plus préférée, à une dose inférieure ou égale à 50 g/Ha.
- Des produits ou compositions comprenant, en tant que principe actif contre le développement de sclerotinia, de l'azoxystrobine (tel que par exemple le produit commercialisé sous le nom de AMISTAR® appliqué à une dose inférieure ou égale à 190 g/ha, de préférence à une dose inférieure ou égale à 125 g/ha ou, de manière encore plus préférée, à une dose inférieure ou égale à 62,5 g/ha.

Parmi les biofongicides couramment utilisés dans l'état de l'art, on peut citer :

- Des produits ou compositions comprenant, en tant que principe actif, du *Pythium oligandrum* appliqué à une dose de $10^8$ ufc/ha. Un exemple de produit comprenant une telle composition est commercialisé sous la dénomination polyversum® et est utilisé contre le développement de la fusariose et sclérotiniose.
- Des produits ou compositions comprenant, en tant que principe actif, *Bacillus pumilus* QST 2808 appliqué à une dose de $2.10^{12}$ufc/ha. Un exemple de produit comprenant une telle composition est commercialisé sous la dénomination ballad® et est utilisé contre le développement de sclerotinia.
- Des produits ou compositions comprenant, en tant que principe actif, *Coniothyrium minitans* appliqué à une dose de $4.10^{12}$ ufc/ha. Un exemple de produit comprenant une telle composition est commercialisé sous la dénomination contans® et est généralement utilisé en traitement de sol contre le développement de sclerotinia.
- Des produits ou compositions comprenant, en tant que principe actif, *Bacillus pumilus* QST 713 appliqué à une dose de $2,3.10^{10}$ ufc/ha. Un exemple de produit comprenant une telle composition est commercialisé sous la dénomination rhapsody® et est utilisé contre le développement de sclerotinia.

L'étape 120 peut être concomitante de l'application 110. L'application 110 et l'étape 120 peuvent également être séparée dans le temps, réalisées séquentiellement, de manière plus ou moins séparée dans le temps, de quelques minutes, quelques heures ou d'un ou plusieurs jours. Cela peut correspondre, par exemple à certains stades de développement de la plante, l'approche de la récolte, présence particulière de pollinisateurs, condition météorologiques particulières (vents porteurs), au respect de seuil sanitaires et autres moments auxquels l'emploi des fongicides conventionnels n'est pas souhaitable... Les plantes pourront être traitées par un fongicide conventionnel seul ou en combinaison avec la composition de l'invention quand cela est possible, et uniquement en mettant l'application 110 lorsque l'emploi de fongicide de synthèse n'est pas souhaité.

Selon un **deuxième aspect**, l'invention porte sur une composition phytosanitaire comprenant, en tant que principe actif, des spores de *Trichoderma atroviridae* EVCH0429 et des spores d'au moins une autre souche de *Trichoderma* et un véhicule.

De manière particulièrement préférée ladite composition est sélectionnée parmi une émulsion aqueuse, une suspension concentrée, un granulé dispersible, une poudre mouillable, poudre de microcapsules/microparticules ou une suspension de microcapsules/ microparticules. Dans un mode de réalisation particulier, ladite composition est appliquée par pulvérisation après dilution dans de l'eau.

Le véhicule étant adapté à une application de ladite composition sur la partie aérienne de la plante.

Comme déjà évoqué en lien avec le procédé de lutte selon l'invention, le véhicule peut présenter des caractéristiques physico-chimiques adaptées à ou aux *Trichoderma* qui y seront mis en suspension. Par exemple, le véhicule peut comprendre au moins un adjuvant sélectionné parmi des agents stabilisants tels que des agents stabilisants, des dispersants, des antidérives, des agents mouillants, des agents favorisant la rétention de la bouillie de pulvérisation, des tampons régulateurs de pH, des agents anti-mousse, des agents anti UV, des agents humectant limitant l'évaporation de l'eau tels que par exemple des polyols, des agents facilitant la pénétration de l'agent actif au travers de la cuticule, des additifs nutritifs permettant d'améliorer la germination des spores.

De préférence, l'adjuvant est une substance démunie d'activité biologique propre. En revanche, lorsque l'adjuvant est compris dans une composition selon l'invention, il permet d'améliorer les propriétés physiques, physico-chimiques et/ou biologiques de la composition, notamment celles du principe actif et en l'occurrence celles des spores de la ou des souche(s) de *Trichoderma.* En fonction des propriétés souhaitées, le ou les adjuvants peuvent permettre, utilisés seuls ou en combinaison, par exemple :

- Dans la cuve :

◦ de modifier le pH afin de protéger le principe actif contre la neutralisation et ainsi d'obtenir une efficacité optimale de la composition une fois appliquée. Cela peut être assuré par exemple par l'ajout de sels de phosphates, de citrate de sodium ou de lécithine de soja.
◦ d'assurer, en milieu aqueux la bonne stabilité de la composition, en d'autres termes éviter toute séparation de phase, telle que sédimentation, floculation ou crémage, c'est-à-dire assurer une répartition homogène et stable du principe actif et une mise en suspension adaptée au type de pulvérisation. Cela peut être assuré par exemple *via* l'utilisation de tensioactifs moléculaires ioniques et/ou non ioniques, des tensioactifs macromoléculaires, ou encore par exemple des viscosifiants.
◦ de diminuer et prévenir la formation de mousse. Cela peut être assuré par exemple par l'ajout d'agents anti-mousse à base de silicone.

- En sortie de buse :
◦ Un effet d'antidérive, notamment l'adjuvant peut permettre le « calibrage » des gouttelettes de façon homogène, via la formation rapide, en sortie de buse, d'un film protecteur à la surface des gouttelettes créées. Ce film permet de limiter l'évaporation de l'eau et de maintenir la taille des gouttelettes constante entre la sortie de la buse et l'application sur la plante. Des exemples d'un tel adjuvant sont, par exemple, les alcools gras à longue chaine, des alcools terpéniques, la lécithine de soja, des oligomères terpéniques ou des organo-silicones. Des additifs ayant un effet viscosifiant sur la formulation peuvent également être utilisés afin d'augmenter la taille des gouttelettes formées lors de la pulvérisation et ainsi contribuer à la limitation de la dérive.
- Sur la plante :

◦ La rétention des gouttelettes de la composition phytosanitaire de l'invention sur la surface de la plante lors de leur entrée en contact avec celle-ci ; En effet lorsqu'une gouttelette de ladite composition entre en contact avec la surface de la feuille, elle passe d'une forme sphérique à une forme elliptique, augmentant ainsi la surface de la gouttelette à l'interface. Il est donc nécessaire de conditionner des tensioactifs au niveau de cette surface nouvellement créée afin de réduire suffisamment la tension superficielle. La rétention peut être ainsi assurée par la présence de tensioactifs ultra-dynamiques capables de se déplacer rapidement vers l'interface plante/gouttelette, par exemple, de petits tensioactifs non ioniques et/ ou des petits tensioactifs hautement ramifiés. La rétention peut aussi être assurée, par exemple, par l'ajout d'agents collants ou encore d'alcools terpéniques, de latex synthétiques, d'oligomères terpéniques et/ou d'organo-silicones.
◦ L'étalement des gouttelettes à la surface de la plante, par l'ajout, par exemple, d'un agent mouillant permettant la réduction de la tension de surface air/gouttelette ainsi que de l'angle de contact entre les gouttelettes et la surface de la plante, ainsi une couverture optimale de la surface de la plante par la composition peut être obtenue. L'étalement peut être assuré, par exemple par des polyéthers trisiloxanes modifiés, des polyoxyéthylène alkyl éthers, des alkyl polysaccharides, des huiles minérales, des huiles végétales et leurs esters, des alcools terpéniques, et/ou des latex synthétiques.
◦ Le maintien d'une humidité prolongée au niveau de la surface de contact de ces gouttelettes avec la plante, tout en limitant l'évaporation du produit après application, afin d'éviter une dessication prématurée de la composition et de permettre la germination des spores, cela peut être assuré par exemple par des alcools gras à longue chaine, du polyéthylène glycol, des dérivés d'esters d'huiles végétales, ou encore par l'ajout d'agents humectant tels que, par exemple, des polyols comme le sorbitol ou le glycerol.
◦ La réduction du lessivage en améliorant le maintien de la composition selon l'invention à la surface de la plante, par exemple par des alcools terpéniques, des latex synthétiques et/ou des oligomères terpéniques.
◦ La pénétration du principe actif à travers la cuticule, par exemple, par l'utilisation d'alcool gras éthoxylé, d'huile minérale, d'huile végétale ou d'un de leurs esters, d'alcool terpénique, d'ester sulfurique, de lécithine de soja, d'oligomère terpénique, et/ou de composés organosiliconés,
◦ La protection contre les UV, par exemple, par l'utilisation de filtres UV minéraux (le dioxyde de cérium ($CeO_2$) et l'hématite ($\alpha$-$Fe_2O_3$)) ou des filtres UV organiques (benzophénones).

L'homme du métier comprendra que le ou les adjuvants seront donc à adapter au mode d'action et caractéristiques du principe actif, à la formulation de la composition souhaitée, au type de plante ciblée (l'emploi d'un agent mouillant sera par exemple particulièrement indiqué dans le cadre du colza dont les feuilles sont particulièrement hydrophobes) ou encore, par exemple, aux conditions météorologiques.
Ainsi, un adjuvant de la composition peut, par exemple, de façon non exhaustive, correspondre :

- à un modificateur/régulateur de pH tel que, par exemple, Aqua-Stable CA 25, Visual pH ou encore LI 700,
- à un dispersant et/ou stabilisant sélectionné parmi les alcools éthoxylés, les esters gras de sorbitane, les alkylpolyglycosides, les copolymères oxyde d'éthylène / oxyde de propylène (OE / PO), les guars, le xanthane, la lécithine de soja, les urées modifiées au stéarate de sorbitan éthoxylé, les polyamides modifiés à l'urée, les polyuréthanes modifiés à l'urée, les résines de polybutadiène à terminaison hydroxyle 20 (KRASOL® (Cray Valley)), éther glycol (e.g., the DOWANOL®series (Dow Chemical)), polyols (polyéthylène glycol), les polyamides, les polyester amides, les dérivés d'alkyl polysaccharides, l'hydroxypropylcellulose, l'hydroxypropylmethyle cellulose, l'hydroxypropylethyle cellulose, l'hydroxyethylcellulose, les composés de type ethylcellulose (par exemple les additifs commercialisés sous la marque BYK® tels que BYK 7411 ES, BYK 431, BYK 430 and BYK 425).

- à un agent anti-mousse ou démoussant tel que par exemple Breaker®, Flighter F®, FLAT-OUT ®, Carl Roth® No. 0734.1.
- à un antidérive tel que, par exemple, des viscosifiants comme la gomme de guar, la gomme xanthane, polyacrylamide, alcool polyvinylique, alcool terpéniques (Heliosol®, Escapade®, Calanque®), lécitine de soja (Li 700®, Elton®, Elvis®, Transit®, Gondor®), oligomère terpénique (Helioterpen film), organo-silicone (Break-Thru® S240, Sylgard® 309, tegoplant®, Willow Wood, Silwet 77), Atplus DRT-NIS®, INTERLOCK®.
- à un mouillant tel que par exemple, des tensioactifs non ioniques de type polysorbates (p.ex. Tween® 80, Tween® 20), esters de sorbitane (Span® 80, Span® 20), polyéthers trisiloxanes modifiés (Break-Thru® S240, Sylgard® 309, tegoplant®, Willow Wood®), polyoxyéthylène alkyl éthers (Triton X45, Triton N60, Triton X100, Triton X114, Triton GRIM, Triton 155). Des alcools alkoxylés (Atplus 448®, Atplus 300F®, Atplus 245®), des dérivés d'alkyl polysaccharides (AL-2575 ®), des huiles minérales (Shellsol T®, Ondina EL®, Isopar M®), huiles végétales (Soja, colza, arachide, tournesol), esters d'huiles végétales (Natur'l oil ®, Codacide ®, Cutinol ®), des alcools terpéniques (Heliosol®), des latex synthétique (Sticman®), des lécithines de soja (Li 700®, Gondor®...).
- à un additif retardant l'évaporation, tel que par exemple, comme huiles végétales, l'huile de maïs ou de soja ou leurs mélanges. De préférence, comme esters d'acides gras végétaux, des esters méthyliques d'acides gras d'huile de maïs ou de soja ou des mélanges de ceux-ci. De préférence, comme polyéthylène glycol, du polyéthylène glycol 300 à 600 et 1000. De préférence, comme humectant, le glycérol, fructose, glucose, isomalt, lactose, maltitol, mannitol, polydextrose, sorbitol, saccharose.
- à un viscosifiant, tel que par exemple, la gomme xanthan, la gomme guar, ou la carboxyméthylcellulose,
- à un composé organo-silicone tel que, par exemple, Break-Thru® S240, Sylgard® 309, Tegoplant® ou encore Willow Wood®,
- à des huiles, ou leur dérivés, telles que par exemple, des huiles minérales (Shellsol T®, Ondina EL®, Isopar M®), huiles végétales (Soja, colza, arachide, tournesol), esters d'huiles végétales (Natur'l oil ®, Codacide ®, Cutinol ®).
- A un filtre UV organique tel que, par exemple, l'acide férulique et ses dérivés, 2,4-dihydroxy benzophenone, 2-hydroxy-4-methoxy benzophenone, 2-hydroxy-4-octyloxy benzophenone (Chimassorb"M81®), 2-(2-hydroxy-3',5'-tert-amylphenyl)benzot riazole (Tinuvin328 ®), 2-(2-hydroxy-3'-tert-butyl-5-meth ylphenyl)-5-chloro-benzotriazole (Tinuvin326®), 2-(2-hy droxy-3',5'-di-tert-butylphenyl)-5-chloro-benzotriazole (Tinuvin327®), 2-(2-hydroxy-5'-methylphenyl)benzotria zole (Tinuvin P®), 2-(3',5'-diallyl-2'-hydroxylphenyl)ben Zotriazole, ethyl 2-cyano-3,3-diphenyl acrylate, 2-ethyl hexyl-2-cyano-3,3-diphenyl acetate, 5-butyl phenyl Salicylate, 2-amino-5-chlorobenzophenone et les filtre UV minéraux tel que le dioxyde de titane ($TiO_2$), le dioxyde de cérium ($CeO_2$) et l'hématite ($\alpha$-$Fe_2O_3$).
- à un absorbant d'humidité tel que par exemple chlorure de calcium, gel de silice, sulfate de magnésium sulfate ou sulfate de sodium.
- à un composé nutritif tel que par exemple les acides aminés, saccharose, glucoses, oligosaccharides, farine de maïs, chitosan, gélatine ou extrait de levure.

La composition peut comprendre plusieurs adjuvants ayant la même fonction et/ou plusieurs adjuvants de fonction différentes. Ainsi par exemple, un tensioactif pourra être utilisé en tant qu'agent stabilisant et/ou agent dispersant.

Des exemples d'adjuvants bien connus de produits développés par différentes sociétés du secteur agricole peuvent également servir comme adjuvant dans le cadre d'une composition phytosanitaire selon l'invention, tels qu'à titre d'exemple non limitatif, les produits commercialisés sous la marque SILWET L 77®, PULVI-X®, STICMAN®, HELIOSOL®, SURF 2000®, ARMOBLEN 650®, BELLAGIO®, ACTIROB B®, COLSURF®, OLIOFIX®, LE 846®, PULVI-X®, HELIOTERPEN® FILM, CALANQUE®, ESCAPADE® et plus généralement tout type d'adjuvants homologués.

De manière avantageuse, le véhicule comprend un « agent mouillant », permettant l'étalement de la composition par augmentation de la surface de contact des gouttelettes de la composition sur la surface de contact avec la partie aérienne de plante et/ou la pénétration du principe actif. De manière préférée, l'agent mouillant est du Tween® 80. De manière préférée, la concentration en agent mouillant de la composition prête à être appliquée sur les parties aériennes de la plante est comprise entre 0,1 g/L et 20 g/L, préférentiellement entre 1 g/L et 15 g/L, de préférence entre 3 g/L et 10 g/L, de manière encore plus préférée à une concentration de 7,5 g/L.

De manière avantageuse, le véhicule comprend un adjuvant antidérive, permettant d'éviter la dispersion en dehors des cultures à traiter de la composition de l'invention.

Les adjuvants tels que les mouillants, antidérives ainsi que les agents améliorant la rétention, la pénétration et additifs limitant l'évaporation sont particulièrement avantageux dans le cadre de l'application par voie aérienne de la composition selon l'invention.

Un mélange d'agent mouillant (tel que par exemple le Tween® 80), d'un agent dispersant améliorant la rétention des gouttes (notamment le propylène glycol), un agent humectant limitant l'évaporation (comme le glycérol ou le sorbitol) et un anti-mousse (par exemple l'anti-mousse commercialisé sous la marque Carl Roth® portant la référence No. 0734.1) peut être utilisé comme adjuvant extemporané pour la présente invention.

La composition selon l'invention est, de préférence, sous forme liquide, et la concentration en spores de *Trichoderma atroviridae* EVCH0429 peut être alors être comprise entre $5.10^8$ ufc/L et $10^{14}$ ufc/L, de préférence, entre $5.10^{10}$ ufc/L et $5.10^{12}$ ufc/L de préférence entre $1.10^{11}$ ufc/L et $1.10^{12}$ ufc/L et la concentration en l'au moins une autre souche de *Trichoderma* telle que, par exemple EVCH0428 ou EVCH0117, peut être comprise entre $5.10^8$ ufc/L et $10^{14}$ ufc/L, de préférence, entre $5.10^{10}$ ufc/L et $5.10^{12}$ ufc/L de préférence entre $1.10^{11}$ ufc/L et $1.10^{12}$ ufc/L. Ladite composition pouvant être diluée pour permettre la mise en œuvre de l'étape d'application du procédé selon l'invention. De préférence, la concentration en spores est déterminée de façon à permettre la mise en œuvre de l'étape d'application du procédé de l'invention et d'atteindre, par exemple sur les cultures, une concentration en *Trichoderma atroviridae* EVCH0429 entre $10^6$ ufc/ha et $10^{16}$ ufc/ha de préférence entre $10^8$ ufc/ha et $10^{15}$ ufc/ha de préférence entre $10^9$ ufc/ha et $10^{14}$ ufc/ha voire entre $10^{10}$ ufc/ha et $10^{13}$ ufc/ha et une concentration en l'au moins autre souche de *Trichoderma asperellum* EVCH0428 comprise entre $10^6$ ufc/ha et $10^{16}$ ufc/ha de préférence entre $10^8$ ufc/ha et $10^{15}$ ufc/ha de préférence entre $10^9$ ufc/ha et $10^{14}$ ufc/ha voir entre $10^{10}$ ufc/ha et $10^{13}$ ufc/ha.

Dans un autre mode de réalisation particulier la composition selon l'invention peut être sous forme solide, en d'autres termes, elle se présente sous forme de poudre à appliquer sur la partie aérienne de la plante selon le procédé de l'invention. Une telle composition peut comprendre également des adjuvants tels que ceux mentionnés ci-dessus, adaptés à cette formulation. L'Homme de l'art saura les déterminer aisément.

Avantageusement, la composition selon l'invention est sélectionnée parmi les compositions suivantes :

- les compositions comprenant des spores de *Trichoderma atroviridae* EVCH0429, des spores d'au moins une souche de *Trichoderma asperellum* et du tween® 80,
- les compositions comprenant des spores de *Trichoderma atroviridae* EVCH0429, des spores d'au moins une autre souche de *Trichoderma harzanium* et du tween® 80,
- les compositions comprenant des spores de *Trichoderma atroviridae* EVCH0429, des spores de *Trichoderma asperellum* EVCH0428 et du tween® 80,
- les compositions comprenant des spores de *Trichoderma atroviridae* EVCH0429, des spores de *Trichoderma harzianum* EVCH0117 et du tween® 80,
- les compositions comprenant des spores de *Trichoderma atroviridae* EVCH0429, des spores de *Trichoderma asperellum* EVCH0428, des spores de *Trichoderma harzianum* EVCH0117 et du tween® 80.

Elle peut comprendre alors, une concentration en spores de *Trichoderma atroviridae* EVCH0429 comprise entre $5.10^8$ ufc/L et $5.10^{12}$ ufc/L et une concentration en spores d'au moins une autre souche de *Trichoderma* comprise entre $5.10^8$ ufc/L et $5.10^{12}$ ufc/L. Ladite composition pouvant être diluée pour permettre la mise en œuvre de l'étape d'application du procédé selon l'invention.

De préférence, la concentration en spores est déterminée de façon à permettre la mise en œuvre de l'étape d'application du procédé de l'invention et d'atteindre ; par exemple sur les cultures, une concentration en *Trichoderma atroviridae* EVCH0429 entre $10^6$ ufc/ha et $10^{16}$ ufc/ha de préférence entre $10^8$ ufc/ha et $10^{15}$ ufc/ha de préférence entre $10^9$ ufc/ha et $10^{14}$ ufc/ha voire entre $10^{10}$ ufc/ha et $10^{13}$ ufc/ha et une concentration en *Trichoderma asperellum* EVCH0428 peut être comprise entre $10^6$ ufc/ha et $10^{16}$ ufc/ha de préférence entre $10^8$ ufc/ha et $10^{15}$ ufc/ha de préférence entre $10^9$ ufc/ha et $10^{14}$ ufc/ha voir entre $10^{10}$ ufc/ha et $10^{13}$ ufc/ha. Dans les compositions de l'invention, le ratio de la quantité de spores de *Trichoderma atroviridae* EVCH0429 à la quantité de spores de l'au moins une autre souche de *Trichoderma* appliqué lors de l'étape 110 peut être de 1/10, 1/9, 1/8, 1/7, 1/6, 1/5, 1/ 4, 1/3, 1/2 ,1/1.

Dans un mode de réalisation préféré, ce ratio est de 1/1.

Dans un mode de réalisation particulier, le ratio de la quantité de spores de *Trichoderma atroviridae* EVCH0429 à la quantité de spores de l'au moins une autre souche de *Trichoderma* appliqué lors de l'étape 110 peut être de 10/1, 9/1, 8/1, 7/1, 6/1, 5/ 1, 4/1, 3/1, 2/1.

Dans un mode de réalisation particulier, les spores de *Trichoderma atroviridae* EVCH0429 et les spores de l'au moins une autre souche de *Trichoderma* sont formulées séparément dans des compositions devant être utilisée dans le procédé de l'invention ci-dessus et telles que décrites ci-dessus, *mutatis mutandis.* Cela peut être particulièrement avantageux dans les cas, par exemple, ou certains adjuvants sont spécifiques de l'une des souches ou de leur application, et non ou peu compatibles.

La composition de l'invention peut être prête à l'emploi. Elle est alors stockée telle quelle et appliquée selon le procédé de l'invention exposé ci-dessus.

Dans un autre mode, elle est préparée extemporanément. En d'autres termes, la ou les compositions (dans le cas où les spores des souches sont appliquées séparément dans le procédé selon l'invention) sont préparées à partir de compositions stocks dans leur composition finale à appliquer selon le procédé de l'invention et notamment, mais pas uniquement, dans les concentrations en spores adéquates et/ou avec les adjuvants adaptés à l'application choisie au moment de la mise en œuvre de l'application.

Ainsi, les spores des souches de *Trichoderma atroviridae* EVCH0429 et de l'au moins une autre souche de *Trichoderma* peuvent être stockées dans des compositions intermédiaires propres à leur conservation et adaptées à l'obtention des compositions selon l'invention devant être appliquées selon le procédé de l'invention.

Une composition intermédiaire peut ainsi être formulée sous forme solide, sous forme par exemple, de poudre mouillable, de granulés dispersibles, de phase huileuse, puis être mise en solution par dispersion, suspension ou dilution, puis, éventuellement être diluée pour obtenir les concentrations en spores désirées ; dans le cas d'une composition intermédiaire solide, celle-ci peut comprendre une concentration en spores de *Trichoderma atroviridae* EVCH0429 comprise entre $5.10^9$ ufc/Kg et $5.10^{14}$ ufc/Kg et une concentration en spores d'au moins une autre souche de *Trichoderma* comprise entre $5.10^9$ ufc/Kg et $5.10^{14}$ ufc/Kg. Alternativement, selon un autre exemple possible de composition intermédiaire, une composition intermédiaire selon l'invention peut être une forme semi-liquide puis être diluée en solution aqueuse, avant son application. Classiquement une composition intermédiaire sera plus concentrée en spores que la composition phytosanitaire destinée à être dispersée sur les cultures.

Également, une composition intermédiaire pourra comprendre un ou des adjuvants nécessaires à la conservation des spores (par exemple un absorbant d'humidité tel que listé précédemment pour limiter l'humidité d'une composition solide), aptes à optimiser l'action du principe actif une fois dispersé sur les parties aériennes des plantes ou, selon un autre exemple les adjuvants propres à améliorer les qualités de l'application par pulvérisation (tel que, par exemple un viscosifiant ou selon un autre exemple, un agent mouillant).

Bien entendu, les compositions intermédiaires peuvent être de nature différente selon l'espèce et/ou la souche de *Trichoderma* qu'elles comprennent.

Dans un mode de réalisation préféré, la au moins une autre souche de *Trichoderma* utilisée en sus de EVCH0429 dans la composition selon l'invention est choisie parmi les espèces *Trichoderma harzanium* et *Trichoderma asperellum.* De manière particulièrement préférée, la au moins une autre souche de *Trichoderma* utilisée en sus de EVCH0429 est sélectionnée parmi *Trichoderma asperellum* EVCH0428 et *Trichoderma harzianum EVCH0117.*

Dans un mode de réalisation particulier, la composition comprend des spores de EVCH0429, EVCH0428 et de EVCH0117.

Les exemples qui suivent illustrent l'invention :

**Exemple 1 : Identification moléculaire des souches EVCH0429 et EVCH0428**

**Matériels et méthodes**

*Culture des souches de Trichoderma*

Une préculture en milieu liquide des souches fongiques EVCH0429, EVCH0428 et de EVCH0117 a été réalisée selon des méthodes connues de l'homme de l'art, en accord avec les prescriptions du fabricant du kit d'extraction de l'ADN génomique (cf. ci-dessous).

*Extraction de l'ADN génomique*

L'extraction de l'ADN génomique a été réalisée à l'aide du kit Nucleospin Plant II® (Macherey Nagel, Allemagne) selon les recommandations du fabricant.

*Amplification de ITS1 et TEF1-$\alpha$ et séauencaae*

L'amplification de la région ITS a été effectuée selon un protocole adapté de Lomascolo et al. (2002).

L'amplification du marqueur TEF1-a selon le protocole de RB Lopes et al. (2018).

*Alignement des séquences arbre phylogénétique*

L'analyse des séquences obtenues a été effectuée par alignement et construction d'un arbre phylogénétique (MEGA software) en comparaison avec les séquences publiques de souches de références de *Trichoderma* sur Genbank (<https://www.ncbi.nlm.nih.gov/genbank/>). L'arbre phylogénétique basé sur le résultat de séquençage de TEF1-a a été construit par la méthode Neighbor-Joining (Saitou & Nei, 1987), en utilisant 500 réplicats pour le calcul de la robustesse statistique (déterminée selon la terminologie anglo-saxonne par la technique dite de bootstrap (Felsenstein, 1985). Les distances évolutives ont été calculées par la méthode du maximum de vraisemblance (Tamura et al. 2004) et sont exprimées en nombre de substitutions de base par site. 15 séquences nucléotidiques ont été impliquées. Toutes les positions vides ou manquantes ont été éliminées. Au total, 701 positions ont été analysées dans les données finales. L'analyse phylogénétique a été conduite avec le logiciel MEGAX (Kumar et al., 2018).

**Résultats**

La comparaison des séquences ITS et TEF1-a obtenues pour EVCH0429 et EVCH0428 avec les séquences de référence mises à disposition par GenBank permet d'identifier EVCH0429 comme une souche de *Trichoderma atroviridae* et EVCH0428 comme une souche de *Trichoderma asperellum*.

La séquence ITS de EVCH0429 présente 100% d'identité avec les séquences ITS de souches de *T. atroviridae* référencées MT341nS.1 MH357337.1, MK619482.1, MK619481.1, MK619480.1 et MN429074.1 dans Genbank. La séquence ITS de EVCH0428 présente 100% d'identité avec les séquences ITS de souches de *T. asperellum* référencées MH215555.1, MH215554.1, MH215551.1, MH215549.1, MH215547.1, et MH215544.1 dans Genbank. Cela est également confirmé par la construction de l'arbre phylogénétique tel que présenté à la Figure 2, sur la base des séquences de TEF1-a.

**Exemple 2 : mise en évidence de l'effet de protection par les souches de *Trichoderma* EVCH0429 en combinaison avec EVCH0428 ou EVCH0117 contre la propagation de *Sclerotinia sclerotiorum* sur des cultures de colza.**

**Matériels et méthodes**

*Production des spores de Trichoderma*

Les souches EVCH0429, EVCH0428 et EVCH0117 ont été produites sur milieu gélosé, en boites de Petri. Après inoculation, les boites ont été incubées à 26°C pendant 7 à 10 jours. Ces conditions permettant la sporulation des champignons, les spores sont ensuite récoltées en ajoutant sur la boite de pétri 10 mL de Tween®80 à 0,1 % dans de l'eau osmosée. La suspension de spores est ensuite prélevée et filtrée à travers une étamine stérile, avant d'être stockée à 4°C jusqu'à utilisation.

*Culture des plantes*

Les essais ont été menés en champs, sous tunnel, sur des plants de colza de la variété d'hiver Hourra, dans des conditions standards de fertilisation NPK (azote, phosphore potassium). Les plants ont subi un traitement insecticide avant les essais.

*Traitements*

Les traitements préventifs avec les compositions testées ont été effectués sur des plants âgés de 2 mois (Stade BBCH 13, soit 3 feuilles), 24 heures avant l'inoculation de *Sclerotinia sclerotiorum.*

Compositions testées

[Tableau 2]

| **Composition** | **Agent mouillant (Tween® 80)** | **EVCH 0429** | **EVCH 0428** | ***Trichoderma atroviridae* I-1237*** | **EVCH 0117** | **T45** | **boscalid** ** |
|---|---|---|---|---|---|---|---|
| Témoin (positif) | 0 | 0 | 0 | 0 | 0 | 0 | 1g/L |
| TW† (témoin négatif) | 7,50 g/L | 0 | 0 | 0 | 0 | 0 | 0 |
| EVCH0429¥ +TW | 7,50 g/L | $5.10^9$ ufc/L | 0 | 0 | 0 | 0 | 0 |

(suite)

| Composition | Agent mouillant (Tween® 80) | EVCH 0429 | EVCH 0428 | *Trichoderma atroviridae* I-1237* | EVCH 0117 | T45 | boscalid** |
|---|---|---|---|---|---|---|---|
| EVCH0428¥¥ +TW | 7,50 g/L | 0 | $5.10^9$ ufc/L | 0 | 0 | 0 | 0 |
| EVCH0429 +EVCH0428 +TW | 7,50 g/L | $2{,}5.10^9$ ufc/L | $2{,}5.10^9$ ufc/L | 0 | 0 | 0 | 0 |
| EVCH0429 + EVCH0117° +TW | 7,50 g/L | $2{,}5.10^9$ ufc/L | 0 | 0 | $2{,}5.10^9$ ufc/L | 0 | 0 |
| EVCH0117 + T45°° + TW | 7,50 g/L | 0 | 0 | 0 | $2{,}5.10^9$ ufc/L | $2{,}5.10^9$ ufc/L | 0 |
| TRISOIL + TW | 7,50 g/L | 0 | 0 | $5.10^9$ ufc/L | 0 | 0 | 0 |
| †, TW : tween® 80 ; ¥, EVCH0429 : *Trichoderma atroviridae* souche EVCH0429 ; ¥¥, EVCH0428: *Trichoderma asperellum* souche EVCH0428; EVCH0117: *Trichoderma harzianum* souche EVCH0117 ; T45 : *Trichoderma asperellum* EVCH45 ; **solution à 2g/L de Pictor Pro®; TRISOIL : *Trichoderma atroviridae* souche I-1237 (bio-fongicide du commerce TRISOIL®), $10^8$ ufc/g de poudre mouillable; ufc : unité formant colonie. | | | | | | | |

Les spores, et éventuellement le Tween® 80 (TW, agent mouillant), ont été dilués dans de l'eau pour obtenir les compositions tests telles que spécifiées dans le tableau 2.

Aux fins de comparaisons avec les compositions de l'invention, *Trichoderma atroviridae* I-1237 usuellement utilisé en traitement racinaire sous le nom TRISOIL, a été appliqué par pulvérisation dans les mêmes conditions que les compositions de l'invention.

Application des compositions test

L'application des compositions test a été effectuée par pulvérisation en utilisant un pulvérisateur manuel sur les parties aériennes des plantes, et notamment de manière à cibler la face supérieure des feuilles. La pulvérisation a été réalisée à la limite du ruissellement.

*Inoculation de* Sclerotinia sclerotiorum

Pour chaque condition, l'inoculation de *Sclerotinia sclerotiorum* a eu lieu 24 heures après le traitement par pulvérisation.

Pour 8 plants par condition, 12 feuilles de 10 cm de long ont été prélevées, inoculées avec *Sclerotinia sclerotiorum,* puis les feuilles placées dans des boites de pétri à température ambiante jusqu'à l'apparition des premiers symptômes, puis conservées à 16 °C.

*Mesure de l'effet protecteur*

Pour chaque feuille, dans chaque condition, la longueur de la nécrose le long de la nervure principale a été mesurée entre J+1 et J+5.

Une moyenne a été déterminée pour les 12 mesures pour chacun des huit plants dans chacune des conditions, et l'effet protecteur calculé de la manière suivante :

[Math1]

$$effet\ protecteur\ = \left(1 - \frac{longueur\ de\ la\ nécrose\ de\ la\ composition\ test}{longueur\ de\ la\ nécrose\ du\ témoin\ négatif}\right) \times 100$$

Les résultats sont présentés dans le tableau 3 ci-dessous, pour chaque jour suivant l'inoculation jusqu'au cinquième jour.

## Résultats

Le tableau 3 ci-dessous présente l'effet protecteur observé pour chacune des compositions test utilisées sur les cultures de colza.

[Tableau 3]

| composition | Efficacité de la protection (% par rapport au témoin négatif) | | | | |
|---|---|---|---|---|---|
| | Jour 1 | Jour 2 | Jour 3 | Jour 4 | Jour 5 |
| Témoin positif (Boscalid 1g/L) | 100 | 97 | 96 | 96 | 96 |
| TW (témoin négatif) | 0 | 0 | 0 | 0 | 0 |
| EVCH0429+TW | 26 | 19 | 8 | 6 | 3 |
| EVCH0428+TW | 18 | 16 | 9 | 8 | 8 |
| EVCH0429+EVCH0428+TW | 34 | 22 | 21 | 26 | 19 |
| EVCH0117+TW | 18 | 14 | 10 | 5 | 5 |
| EVCH0429+EVCH0117+TW | 23 | 16 | 23 | 18 | 15 |
| EVCH0117+T45+TW | 23 | 13 | 5 | 9 | 7 |
| TRISOIL+TW | 48 | 24 | 16 | 19 | 14 |

Comme attendu, le fongicide chimique (boscalid) utilisé dans l'essai témoin présente une action particulièrement efficace contre le champignon pathogène *Sclerotinia sclerotiorum.*

Il est observé qu'aucune protection n'est conférée par l'emploi de l'agent mouillant (Tween® 80, composition TW). Le Tween® ne présente donc aucune action contre le champignon pathogène *Sclerotinia sclerotiorum.* Néanmoins, du fait de l'hydrophobicité importante des feuilles de colza, l'utilisation d'un agent mouillant, tel que le tween, est particulièrement avantageuse.

Une protection des feuilles de colza peut être observée jusqu'au jour 2 de l'infection pour les souches EVCH0429, EVCH0428, EVCH0117 utilisées seules en présence d'agent mouillant, cependant, il peut être constaté que dès le jour 3, la protection conférée par ces souches de *Trichoderma* a quasiment disparu.

Bien que les souches de *Trichoderma*, prises séparément, aient démontré une faible efficacité dans le cadre de la protection des cultures de colza infectées par le champignon pathogène *Sclerotinia sclerotiorum*, de manière surprenante, une protection des cultures de colza perdurant au moins jusqu'à T+5 jours est observée quand ces souches sont utilisées en combinaison (compositions EVCH0429+EVCH0428+TW ou EVCH0429+EVCH0117+TW). Il est observé que l'application combinée de la souche de *T. harzianum* EVCH0117 avec une souche de *T. asperellum* ECH45 (EVCH0117+T45+TW) ne confère pas une protection aussi efficace que les compositions comprenant EVCH0429. L'application sur les parties aériennes de la plante d'une combinaison de *Trichoderma atroviridae* EVCH0429 avec *Trichoderma asperellum* EVCH0428 (ou *Trichoderma harzianum* EVCH0117 permet donc de limiter l'infection par le champignon pathogène *Sclerotinia sclerotiorum* et sa propagation au cours du temps.

Ces données montrent que la combinaison de EVCH0429 avec au moins une autre souche de *Trichoderma,* notamment au moins une souche de *Trichoderma asperellum* et/ou au moins une autre souche *Trichoderma harzianum* permet un traitement biofongicide aérien efficace contre des pathologies fongiques telles que le sclerotinia.

De manière tout à fait intéressante il est observé, dans les essais effectués, que l'effet protecteur de la composition comprenant une combinaison de *Trichoderma atroviridae* EVCH0429 avec *Trichoderma asperellum* EVCH0428 ou *Trichoderma harzianum* EVCH0117, en traitement aérien selon l'invention, est plus efficace (cf, e.g., les jours 3, 4 et 5 pour EVCH0429 avec EVCH0428) que la protection conférée par un traitement avec du Tri-soil® adjuventé au Tween® et appliqué par pulvérisation. En effet, le Tri-soil® est un produit destiné à une application racinaire par irrigation et semble, au vu des résultats, particulièrement peu adapté pour un traitement des plantes par application aérienne.

**Exemple 3 : mise en évidence de l'effet de protection par les souches de *Trichoderma* EVCH0429 et EVCH0428 contre la propagation de *Fusarium culmorum* par des tests *in-vitro.***

**Matériels et méthodes**

*Production des spores de Trichoderma*

Les souches EVCH0429 (*T. atroviridae*), EVCH0428 (*T. asperellum*), EVCH45 (*T. harzanium*), EVCH0095 (*T. atroviridae*) et EVCH0304 (*T. atroviridae*) ont été cultivées et les préparations de spores ont été effectuées comme indiqué dans l'exemple 2.

*Inoculum du champignon pathogène Fusarium culmorum :*

Une souche de référence de *Fusarium culmorum* M601 a été utilisée pour ces expériences. Cette souche appartient à la Collection STAPHYT L&G. La souche a été préalablement cultivée sur boîte de Pétri sur milieu gélosé PDA (pour « Potato Dextrose Agar ») afin de produire suffisamment d'inoculum pour réaliser les tests : Les inoculum de *F. culmorum* sont des explants de la marge active d'une colonie (cf ci-dessous).

*Compositions testées*

[Tableau 4]

| Condition | EVCH0429 | EVCH0428 | EVCH45 | EVCH095 | EVCH0304 | *Fusarium culmorum** |
|---|---|---|---|---|---|---|
| 1 | 0 | 0 | 0 | 0 | 0 | oui |
| 2 | $5*10^6$ ufc/L | 0 | 0 | 0 | 0 | oui |
| 3 | 0 | $5*10^6$ ufc/L | 0 | 0 | 0 | oui |
| 4 | 0 | 0 | $5*10^6$ ufc/L | 0 | 0 | oui |
| 5 | 0 | 0 | 0 | $5*10^6$ ufc/L | 0 | oui |
| 6 | 0 | 0 | 0 | 0L | $5*10^6$ ufc/L | oui |
| * : Explant de 6 mm issu de la marge active d'une colonie ; EVCH0429 : *Trichoderma atroviridae* souche EVCH0429 ; EVCH0428 : *Trichoderma asperellum* souche EVCH0428 ; souche EVCH095 : *Trichoderma atroviridae ;* souche EVCH0304 : *Trichoderma atroviridae* ; souche EVCH45 :*Trichoderma asperellum.* | | | | | | |

Le titrage de la concentration de l'inoculum a été réalisé par comptage des spores des différentes suspensions avec une cellule de Malassez. Pour chaque test, une goutte de 10μL de suspension de spores, à une concentration de $5 \times 10^5$spores/mL a été déposée sur des confettis Whatman placés dans une boîte de Pétri en milieu gélosé PDA.

*Mesure de l'effet protecteur : méthode de confrontation directe*

Pour chaque souche, cinq boîtes de Pétri en milieu gélosé PDA ont été inoculées.

*Fusarium culmorum* a été cultivé sur PDA. Un explant de 6 mm de la marge active d'une colonie de *Fusarium culmorum* cultivé sur PDA a été coupé à l'aide d'un perce-bouchon stérilisé à la flamme et placé à l'envers au centre de la boîte de Pétri PDA.

L'activité antagoniste *in vitro* des *Trichoderma* vis-à-vis de *F culmorum* a été étudiée selon la méthode de confrontation directe selon la méthode de Patel et Brown, également appelée « technique des cultures opposées ». Elle consiste à placer dans une boite de Pétri d'un diamètre de 90 mm contenant 20 ml de PDA, à la fois le champignon antagoniste à tester (ici les souches de Trichoderma) et la souche pathogène (ici *F culmorum)* selon un axe diamétral, distant de 5 cm et équidistant du centre de la boîte.

Comme les taux de croissance des souches de *Trichoderma* sont plus rapides que celui de *F. culmorum*, *F. culmorum* a été inoculé sur boîte de Pétri 24 heures avant les souches de *Trichoderma.* L'appréciation de l'effet antagoniste consiste à mesurer la croissance diamétrale selon 2 axes perpendiculaires : le point d'intersection de ces axes est le centre de l'expiant de *F culmorum* ou de la goutte de préparation de spores de *Trichoderma* qui a été déposée sur la boîte de Pétri. Ces diamètres sont mesurés à différents intervalles sur 3 jours de culture, à 23°C dans l'obscurité.

Pour chaque boîte de Pétri, le pourcentage d'inhibition de la croissance diamétrale de *F. culmorum* (RPDG) a été calculé en comparant la taille de la colonie témoin (condition 1), c'est-à-dire lorsque la boîte de Pétri a été inoculée avec *F. culmorum* seul ou avec la ou les souches de Trichoderma (conditions tests 2-6), selon la formule suivante :

$RPDG = (\varnothing T - \varnothing E)/ \varnothing T \times 100$, avec

$\varnothing T$ : Diamètre (en mm) moyen de la colonie témoin.

$\varnothing E$ : Diamètre (en mm) moyen de la souche pathogène face à la ou les souches de *Trichoderma.*

Le taux de croissance de fusarium a été déterminé par régression linéaire : il correspond à la pente de la courbe de croissance de la taille de la colonie en fonction du temps de culture.

Le pourcentage d'inhibition de la croissance a ensuite été calculé de la manière suivante :

[(taux de croissance de fusarium en condition 1 - taux de croissance de fusarium en condition test)/taux de croissance de fusarium en condition 1]*100.

Les résultats sont présentés dans le tableau 5 ci-dessous, pour chaque jour suivant l'inoculation par *Fusarium culmorum* jusqu'au troisième jour.

**Résultats**

Le tableau 5 ci-dessous présente l'effet protecteur observé pour chacune des souches testées, la mesure moyenne (n = 5) de la taille des colonies pour la souche de *Fusarium culmorum* lorsqu'elle a été inoculée seule (condition 1) ou avec des souches de *Trichoderma* (conditions2 à 9).

La souche *Fusarium culmorum* a été inoculée au jour J-0, chaque souche de *Trichoderma* a été inoculée 24 heures après au jour J+1 et la croissance a été suivie pendant les trois jours suivants, respectivement aux jours J+2, J+3 et J+4. Le RPDG a donc été calculé aux jours J+2, J+3 et J+4 et le RPDG moyen a été calculé. Le taux de croissance de *Fusarium culmorum* a également été déterminé pour toutes les conditions du test et le pourcentage d'inhibition de croissance résultant a été calculé pour toutes les conditions inoculées avec la ou les souches de *Trichoderma.*

[Tableau 5]

| | Moyenne des mesures (mm) de la taille des colonies (n=5) | | | | | | | |
|---|---|---|---|---|---|---|---|---|
| Condition | J+2 | J+3 | J+4 | RDPG mesuré (% d'inhibition) | | | Inhibition moyenne RDPG moyen | % d'inhibition de la croissance |
| 1 | 13,83 | 29,42 | 48,5 | n.a | n.a | n.a | n.a | n.a |
| 2 | 10,92 | 23,75 | 37,92 | 21,1 | 19,3 | 21,8 | 20,7 | 21,1 |
| 3 | 13,17 | 25,25 | 37,75 | 4,8 | 14,2 | 22,2 | 13,7 | 18,9 |
| 4 | 13,00 | 28,08 | 40,25 | 6,0 | 4,5 | 17,0 | 9,2 | 13,0 |
| 5 | 15,75 | 29,08 | 42,08 | 0 | 1,1 | 13,2 | 4,8 | 8,2 |
| 6 | 17,17 | 32,42 | 42,17 | 0 | 0 | 13,1 | 4,4 | 4,4 |

Les conditions de ces tests *in vitro* pourraient être considérés comme étant plus favorables à la croissance du pathogène *F. culmorum.* Néanmoins, dans ces conditions, une activité antagoniste vis-à-vis de *F. culmorum* particulièrement élevée, comparée à celle des autres *Trichoderma* testés, est tout de même observée pour les spores de la souche EVCH0429 à la fois quant au RGPD et/ou au taux de croissance (respectivement 20,7% et 21,1%).

En effet, de manière particulièrement surprenante, les tests réalisés avec d'autres souches de la même espèce *Trichoderma atroviride*, les souches EVCH45 (condition 5) et EVCH0304 (condition 6) montrent respectivement une inhibition du taux croissance de *Fusarium culmorum* de 8,2 % et de 4,4 % bien plus faible que pour les tests réalisés avec la souche EVCH0429. Cet effet est encore plus marqué pour la mesure du RDPG.

Ainsi, les données expérimentales montrent un effet antagoniste de la souche EVCH0429 à l'encontre des pathogènes fongiques bien supérieur aux autres souches de *Trichoderma* testés, y compris de la même espèce. En outre, les combinaisons de *Trichoderma* comprenant EVCH0429 confèrent en application foliaire un effet protecteur de plus longue durée que les autres combinaisons ne comprenant pas cette souche.

**REFERENCES BIBLIOGRAPHIQUES**

Benítez T, Rincón AM, Limon MC, Codón AC. (2004) Biocontrol mechanisms of Trichoderma strains. Int Microbiol.;7(4):249-60.

Elad Y. (2000). Biological control of foliar pathogens by means of Trichoderma harzianum and potential mode of action. Crop Protection. 19. 709-714. 10.1016/S0261-2194(00)00094-6.

Felsenstein J. (1985). Confidence limits on phylogenies: An approach using the bootstrap. Evolution 39:783-791.

Darshan M. Rudakiya et al. (2019) Stratégies to Improve Solid-State Fermentation Technology. Elsevier

Harman GE. Myths and Dogmas of Biocontrol Changes in Perceptions Derived from Research on Trichoderma harzinum T-22 (2000). Plant Dis. Apr;84(4):377-393.

Kumar S., Stecher G., Li M., Knyaz C., and Tamura K. (2018). MEGA X: Molecular Evolutionary Genetics Analysis across computing platforms. Molecular Biology and Evolution 35:1547-1549.

Lomascolo A., Cayol JL, Roche M., Guo L. & Robert JL & Record E.& Lesage-Meessen L. et al. (2002). Molecular clustering of Pycnoporus strains from various geographic origins and isolation of monokaryotic strains for laccase hyperproduction. Mycological Research.

Lopes RB, Souza DA, Rocha LFN, Montalva C, Luz C, Humber RA, Faria M. (2018) Metarhizium alvesii sp. nov.: A new member of the Metarhizium anisopliae species complex. J Invertebr Pathol. Jan;151:165-168.

Perelló A., Mónaco C., Moreno M., Cordo C., Simón M. (2006). The effect of Trichoderma harzianum and T. koningii on the control of tan spot (Pyrenophora tritici-repentis) and leaf blotch (Mycosphaerella graminicola) of wheat under field conditions in Argentina. Biocontrol Science and Technology. 16. 803-813.

Stocco, M.C., Mónaco, C.I., Abramoff, C. et al. (2016).Selection and characterization of Argentine isolates of Trichoderma harzianum for effective biocontrol of Septoria leaf blotch of wheat. World J Microbiol Biotechnol 32, 49

Saitou N. and Nei M. (1987). The neighbor-joining method: A new method for reconstructing phylogenetic trees. Molecufar Biology and Evolution 4:406-425.

Tamura K., Nei M., and Kumar S. (2004). Prospects for inferring very large phylogenies by using the neighborjoining method. Proceedings of the National Academy of Sciences (USA) 101 :11030-11035.

## Revendications

1. Procédé (100) de lutte contre une maladie d'une plante provoquée par un ascomycète pathogène, ledit procédé comprenant au moins une étape d'application (110) d'une souche de *Trichoderma atroviridae* EVCH0429 enregistrée sous le numéro CNCM I-5638 et d'au moins une autre souche de *Trichoderma* sur au moins une partie aérienne de la plante à traiter contre ledit ascomycète pathogène.

2. Procédé (100) selon la revendication 1, **caractérisé en ce que** l'au moins une autre souche de *Trichoderma* est sélectionnée parmi *Trichoderma asperellum* EVCH0428 *ou Trichoderma harzianum* EVCH0117, enregistrées respectivement sous les numéros CNCM I-5637 et CNCM I-5636.

3. Procédé (100) selon l'une quelconque des revendications 1 ou 2, **caractérisé en ce que** l'étape d'application (110) comporte au moins une application (111) d'une composition comportant un *Trichoderma atroviridae* EVCH0429 ainsi qu'au moins une application (112) d'une composition comportant au moins une autre souche de *Trichoderma* les au moins une étape d'application (111) et (112) étant réalisées concomitamment ou séquentiellement.

4. Procédé (100) selon l'une quelconque des revendications 1 à 3, **caractérisé en ce que** l'étape d'application (110) consiste en une application par pulvérisation.

5. Procédé (100) selon l'une quelconque des revendications 1 à 4, **caractérisé en ce que** la partie aérienne de la plante à traiter correspond à une feuille, une tige, une fleur, un épi et/ou un fruit.

6. Procédé (100) selon l'une quelconque des revendications 1 à 5, **caractérisé en ce que** l'au moins une étape d'application (110) comporte une application réalisée sur ladite au moins une partie aérienne de la plante après récolte.

7. Procédé (100) selon l'une quelconque des revendications 1 à 6, **caractérisé en ce que** l'ascomycète pathogène correspond à un ascomycète appartenant à l'une des familles suivantes:

- *Microdochium spp* et *Fusarium* « *roseum* »,
- *Phaeosphaeriaceae* et *Mycosphaerellaceae*, et
- *Sclerotiniaceae.*

8. Procédé (100) selon l'une quelconque des revendications 1 à 7, **caractérisé en ce que** la maladie est choisie parmi la sclerotinia du colza, la fusariose du blé, la septoriose du blé, la cercosporiose du bananier, la pourriture grise et la pourriture blanche.

9. Procédé (100) selon l'une quelconque des revendications 1 à 8, **caractérisé en ce qu'**il est mis en œuvre sur des cultures en champs, ou en serre, des cultures ornementales, ou en maraichage.

10. Procédé (100) selon l'une quelconque des revendications 1 à 9, **caractérisé en ce que** la plante est choisie dans le groupe des familles des Brassicacées, des Graminées, des Vitacées et des Musacées.

11. Composition phytosanitaire comprenant, en tant que principe actif, des spores de *Trichoderma atroviridae* EVCH0429, souche enregistrée sous le numéro CNCM I-5638 et des spores d'au moins une autre souche de *Trichoderma,* et un véhicule adapté, de préférence spécifique, à une application de ladite composition sur une partie aérienne d'une plante.

12. Composition phytosanitaire selon la revendication 11, **caractérisée en ce que** l'au moins une autre souche de *Trichoderma* est sélectionnée parmi *Trichoderma asperellum* EVCH0428 et *Trichoderma harzianum* EVCH0117 enregistrées respectivement sous les numéros CNCM I-5637 et CNCM I-5636.

13. Composition phytosanitaire selon l'une quelconque des revendications 11 ou 12, **caractérisée en ce que** la composition est sous forme liquide et comprend une concentration en spores de *Trichoderma* comprise entre $10^8$ ufc/L et $10^{14}$ ufc/L, de préférence entre $5.10^8$ ufc/L et $5.10^{12}$ ufc/L.

14. Composition phytosanitaire selon l'une quelconque des revendications 11 à 13, **caractérisée en ce que** le véhicule comprend un agent mouillant.

15. Composition phytosanitaire selon la revendication 14, **caractérisée en ce que** le véhicule comprend une concentration en agent mouillant comprise entre 0,1 g/L et 20 g/L.

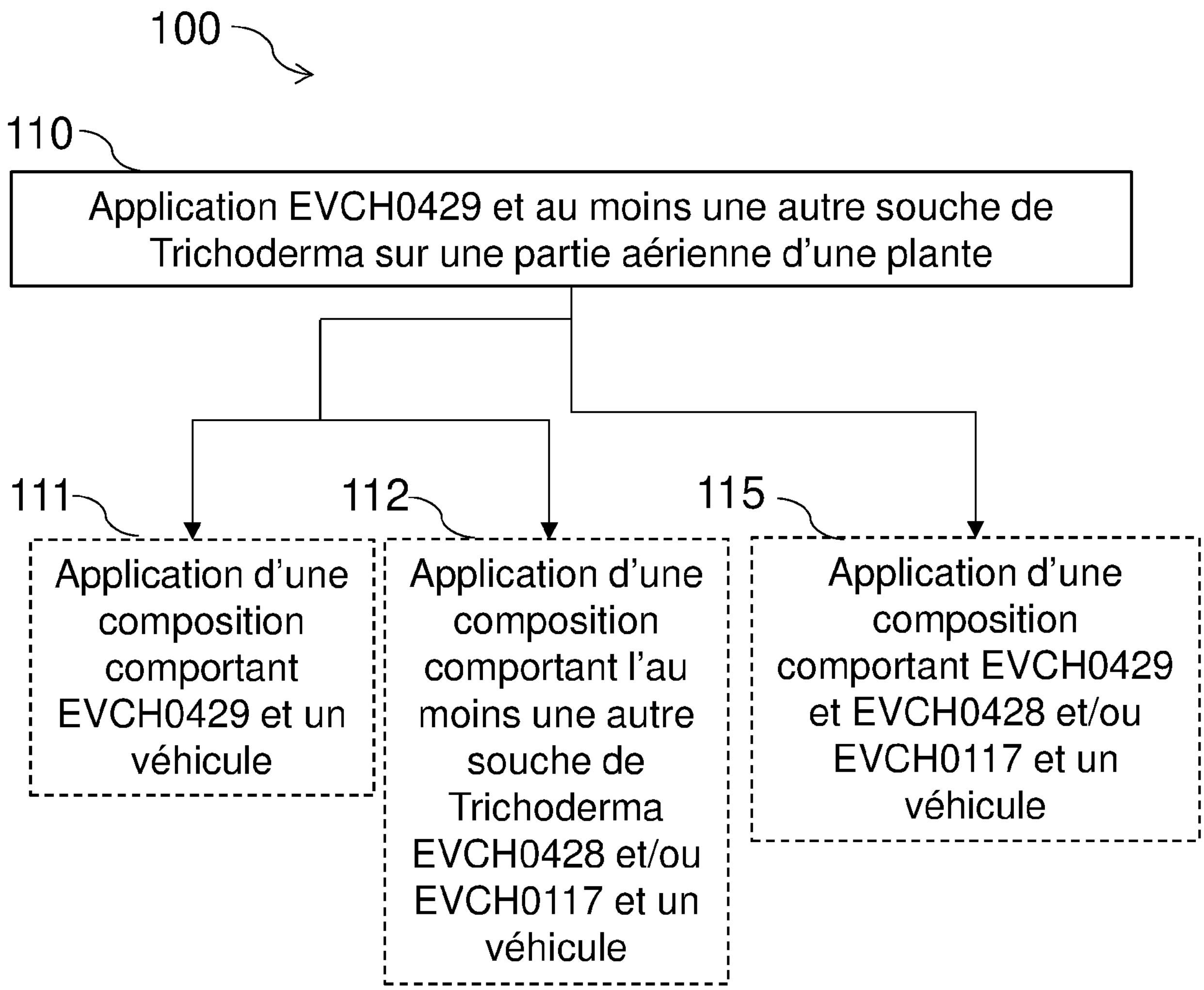
100
110
Application EVCH0429 et au moins une autre souche de Trichoderma sur une partie aérienne d'une plante
111
Application d'une composition comportant EVCH0429 et un véhicule
112
Application d'une composition comportant l'au moins une autre souche de Trichoderma EVCH0428 et/ou EVCH0117 et un véhicule
115
Application d'une composition comportant EVCH0429 et EVCH0428 et/ou EVCH0117 et un véhicule

**FIG. 1**

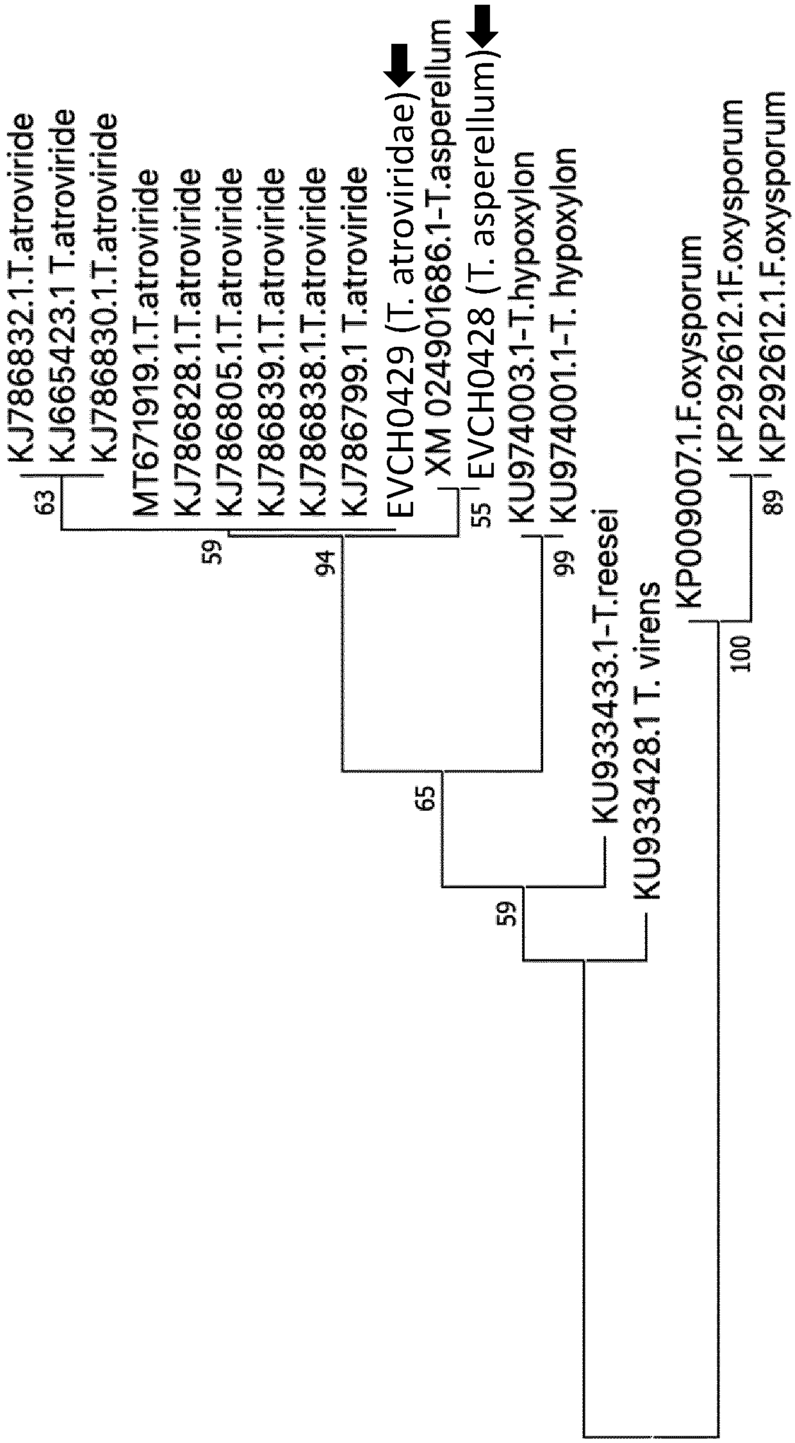
KJ786832.1.T.atroviride
KJ665423.1 T.atroviride
KJ786830.1.T.atroviride
MT671919.1.T.atroviride
KJ786828.1.T.atroviride
KJ786805.1.T.atroviride
KJ786839.1.T.atroviride
KJ786838.1.T.atroviride
KJ786799.1 T.atroviride
EVCH0429 (T. atroviridae)
XM 024901686.1-T.asperellum
EVCH0428 (T. asperellum)
KU974003.1-T.hypoxylon
KU974001.1-T. hypoxylon
KU933433.1-T.reesei
KU933428.1 T. virens
KP009007.1.F.oxysporum
KP292612.1F.oxysporum
KP292612.1.F.oxysporum
63
59
94
55
99
65
59
100
89

FIG. 2

Europäisches Patentamt
European Patent Office
Office européen des brevets

# RAPPORT DE RECHERCHE EUROPEENNE

Numéro de la demande
EP 22 15 4131

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 876 232 A1 (NIXE [FR])<br>9 janvier 2008 (2008-01-09)<br>* le document en entier *<br>----- | 1-15 | INV.<br>A01N63/38<br>A01P3/00 |
| X | FR 3 097 557 A1 (AGRO INDUSTRIE RECH ET DEVELOPPEMENTS A R D [FR])<br>25 décembre 2020 (2020-12-25)<br>* le document en entier *<br>----- | 1-15 | |
| X | US 2011/009260 A1 (STEWART ALISON [NZ])<br>13 janvier 2011 (2011-01-13)<br>* le document en entier *<br>----- | 1-15 | |
| X | EP 3 034 600 A1 (BAYER CROPSCIENCE BIOLOG GMBH [DE]; BAYER CROPSCIENCE AG [DE])<br>22 juin 2016 (2016-06-22)<br>* le document en entier *<br>----- | 1-15 | |
| X | EP 3 468 368 A1 (BIPA NV [BE])<br>17 avril 2019 (2019-04-17)<br>* le document en entier *<br>----- | 1-15 | |

DOMAINES TECHNIQUES RECHERCHES (IPC)

A01N
A01P

Le présent rapport a été établi pour toutes les revendications

1

| Lieu de la recherche | Date d'achèvement de la recherche | Examinateur |
|---|---|---|
| Munich | 18 mai 2022 | Bertrand, Franck |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................................................
& : membre de la même famille, document correspondant

EPO FORM 1503 03.82 (P04C02)

## ANNEXE AU RAPPORT DE RECHERCHE EUROPEENNE RELATIF A LA DEMANDE DE BREVET EUROPEEN NO.

EP 22 15 4131

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-05-2022

| Document brevet cité au rapport de recherche | Date de publication | Membre(s) de la famille de brevet(s) | Date de publication |
|---|---|---|---|
| EP 1876232 A1 | 09-01-2008 | AR 061816 A1 | 24-09-2008 |
| | | CL 2007001950 A1 | 08-02-2008 |
| | | EP 1876232 A1 | 09-01-2008 |
| | | FR 2903419 A1 | 11-01-2008 |
| FR 3097557 A1 | 25-12-2020 | EP 3987068 A1 | 27-04-2022 |
| | | FR 3097557 A1 | 25-12-2020 |
| | | WO 2020254533 A1 | 24-12-2020 |
| US 2011009260 A1 | 13-01-2011 | AU 2009213203 A1 | 20-08-2009 |
| | | NZ 587233 A | 29-06-2012 |
| | | NZ 598091 A | 27-07-2012 |
| | | NZ 598092 A | 27-07-2012 |
| | | US 2011009260 A1 | 13-01-2011 |
| | | WO 2009102222 A1 | 20-08-2009 |
| EP 3034600 A1 | 22-06-2016 | AR 103045 A1 | 12-04-2017 |
| | | EP 3034600 A1 | 22-06-2016 |
| EP 3468368 A1 | 17-04-2019 | BE 1023676 B1 | 13-06-2017 |
| | | CO 2018012933 A2 | 08-02-2019 |
| | | CR 20180562 A | 05-06-2019 |
| | | EC SP18088184 A | 29-03-2019 |
| | | EP 3468368 A1 | 17-04-2019 |
| | | PH 12018550203 A1 | 21-10-2019 |
| | | WO 2017212032 A1 | 14-12-2017 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- *Utilisation des produits phytopharmaceutiques,* 2017, https://www.igas.gouv.fr/IMG/pdf/2017-124R-Tome1-Rapport.pdf
- **BENÍTEZ T ; RINCÓN AM ; LIMON MC ; CODÓN AC.** Biocontrol mechanisms of Trichoderma strains. *Int Microbiol.,* 2004, vol. 7 (4), 249-60
- **ELAD Y.** Biological control of foliar pathogens by means of Trichoderma harzianum and potential mode of action. *Crop Protection,* 2000, vol. 19, 709-714
- **FELSENSTEIN J.** Confidence limits on phylogenies: An approach using the bootstrap. *Evolution,* 1985, vol. 39, 783-791
- **DARSHAN M. RUDAKIYA et al.** Stratégies to Improve Solid-State Fermentation Technology. Elsevier, 2019
- **HARMAN GE.** Myths and Dogmas of Biocontrol Changes in Perceptions Derived from Research on Trichoderma harzinum T-22. *Plant Dis.,* Avril 2000, vol. 84 (4), 377-393
- **KUMAR S. ; STECHER G. ; LI M. ; KNYAZ C. ; TAMURA K.** MEGA X: Molecular Evolutionary Genetics Analysis across computing platforms. *Molecular Biology and Evolution,* 2018, vol. 35, 1547-1549
- **LOMASCOLO A. ; CAYOL JL ; ROCHE M. ; GUO L. ; ROBERT JL ; RECORD E. ; LESAGE-MEESSEN L. et al.** Molecular clustering of Pycnoporus strains from various geographic origins and isolation of monokaryotic strains for laccase hyperproduction. *Mycological Research,* 2002
- **LOPES RB ; SOUZA DA ; ROCHA LFN ; MONTALVA C ; LUZ C ; HUMBER RA ; FARIA M.** Metarhizium alvesii sp. nov.: A new member of the Metarhizium anisopliae species complex. *J Invertebr Pathol.,* Janvier 2018, vol. 151, 165-168
- **PERELLÓ A. ; MÓNACO C. ; MORENO M. ; CORDO C. ; SIMÓN M.** The effect of Trichoderma harzianum and T. koningii on the control of tan spot (Pyrenophora tritici-repentis) and leaf blotch (Mycosphaerella graminicola) of wheat under field conditions in Argentina. *Biocontrol Science and Technology,* 2006, vol. 16, 803-813
- **STOCCO, M.C. ; MÓNACO, C.I. ; ABRAMOFF, C. et al.** Selection and characterization of Argentine isolates of Trichoderma harzianum for effective biocontrol of Septoria leaf blotch of wheat. *World J Microbiol Biotechnol,* 2016, vol. 32, 49
- **SAITOU N. ; NEI M.** The neighbor-joining method: A new method for reconstructing phylogenetic trees. *Molecufar Biology and Evolution,* 1987, vol. 4, 406-425
- **TAMURA K. ; NEI M. ; KUMAR S.** Prospects for inferring very large phylogenies by using the neighbor-joining method. *Proceedings of the National Academy of Sciences (USA),* 2004, vol. 101, 11030-11035